# EUROPEAN PATENT APPLICATION

(11) **EP 4 071 124 A1**
(43) Date of publication of application: **12.10.2022**
(21) Application number: 20895029.5
(22) Date of filing: 01.12.2020
(51) Int. Cl.: C04B 28/04, C04B 28/06, C04B 28/08, C04B 28/00, C04B 111/20, C04B 111/24, A01K 61/54, A01K 61/77, B28B 1/50, B28B 1/093, B28B 1/04, B28C 5/00

(54) **CONCRETE OYSTER ATTACHMENT BASE AND PREPARATION METHOD THEREFOR, AND MARINE ECOLOGICAL ENGINEERING CONSTRUCTION METHOD**

(30) Priority: 02.12.2019 CN 201911210542; 02.12.2019 CN 201911210403
(71) Applicant: Harbin Engineering University, Harbin, Heilongjiang 150001 (CN)
(72) Inventor: LV, Jianfu, Harbin, Heilongjiang 150001 (CN); CAO, Zhenzhen, Harbin, Heilongjiang 150001 (CN); WANG, Mingjun, Harbin, Heilongjiang 150001 (CN)
(74) Representative: Zaboliene, Reda
(86) International application number: PCT/CN2020/133083
(87) International publication number: WO 2021/109984

(57) **Abstract**

Disclosed is settlement substrate for oyster technology, and, in particular, the present disclosure relates to a concrete settlement substrate for oyster and a preparation method thereof, and a construction method. The concrete settlement substrate for oyster has the characteristics of induction of rapid settlement and metamorphosis of sessile organisms there to, promotion of long-term growth and good durability, and the oysters are settled on a surface of concrete. A reasonable spatial layout is utilized, such that each concrete pile (block) can effectively break waves and ensure smooth exchange between water bodies on two sides. After oysters settled to each concrete pile (block) breed a large amount, the water bodies can be purified, and the ecological environment in the surrounding sea area can be improved.

## Description

This application claims the priority of a Chinese patent application with an application number of 201911210542.0 and a present invention title of "A concrete settlement substrate with a rough surface for oyster and a preparation method thereof' submitted to the Chinese Patent Office on December 2^{nd}, 2019, and claims the priority of a Chinese patent application with an application number of 201911210403.8 and a present invention title of "A marine ecological engineering construction method" submitted to the Chinese Patent Office on December 2^{nd}, 2019, and the entire contents of which are incorporated by reference in this application.

### TECHNICAL FIELD

The present invention relates to an oyster settlement substrate technology and a marine ecological engineering construction technology, particularly relates to a concrete settlement substrate for oyster and a preparation method thereof, and a marine ecological engineering construction method, which belongs to the cross field of marine sessile organisms and concrete.

### BACKGROUND

With the improvement of the living standard of people, the consumption demand for oysters serving as healthy food on dining tables is increasing. A traditional small-scale culture method cannot meet the growing demandforoyster. Meanwhile, with the increase of the amount of oyster reefrestoration and the coming of oyster reef-like marine ecological engineering construction, the demand for an oyster settlement substrate is increasing.Common culture methods include bamboo inserting culture, bottom culture, strip stone and vertical stone culture, hanging dropculture and the like,but there is the problem that oysters need a long time to reach a satisfactory settlement rate on the settlement substrate. In addition, due to the increase of the culture amount of oysters, the oyster settlement substrate of shells such as Azumapecten farreri cannot meet the requirement of oyster larvae culture, which leads to an increase in the price of oyster settlement substrate of shells. Moreover, in the CN106719186 patent invented by Ocean University of China recently, a novel oyster settlement substrate is prepared by adding15%-20% shell powder (by weight of cement paste) and 5-15% shell fragments. Due to the addition of oyster shell fragments, the surface of the settlement substrate becomes rougher, which increases the number of settled oysters.Compared with a method for Azumapecten farreri, this method is more convenient to collect oyster larvae, and the settlement effect of oyster larvae is better. However, the water consumption control conducted through a water reducing agent and the curing are not considered, and the water-cement ratio and curing determine the permeability of concrete. A large amount of alkali contained in the settlement substrate can be released, consequently, the alkalinity of seawater making contact with the settlement substrate is increased, and settlement of marine sessile organism larvae is restrained. Especially when larvae are cultured in a larva culture pond, the situation that the pH value of water is increased due to the small water mass, and consequently the oyster larvae die is likely to happen. Meanwhile, due to the fact that a large amount of shell powder is added, the color of a cement settlement substrate becomes light from dark gray, and settlement of the oysters is not facilitated.

### SUMMARY of the Invention

An objective of the present invention is to provide a lightweight concrete settlement substrate which can induce sessile organisms to rapidly and compactly settleto the concrete surface and has good durability, aiming at solving the problems that at present, due to the fact that water consumption control and curing (the water-cement ratio and curing determine the permeability of concrete) are not carried out, thus a large amount of alkali contained in the settlement substrate is released, the alkalinity of seawater making contact with the settlement substrate is increased, settlementof marine sessile organism larvae is restrained, and meanwhile, due to the fact that a large amount of shell powder is added, the color of a concrete settlement substrate becomes light from dark gray, and settlement of oysters is not facilitated.

The objective of the present invention is realized as follows: the cement dosage in the settlement substrate is reduced, a proper cement type is selected, and a proper mineral admixture is added to obtain cement with lower alkalinity. Meanwhile, the water-cement ratio of the concrete of the settlement substrate is controlled, and the release rate of the concrete is controlled. According to the color preferred by settled oysters and the addition of biological calcium, calcium carbonate and trace elements, the early settlement, metamorphosis and later growth of the oysters are promoted. Meanwhile, the configuration design of the settlement substrate is carried out. In addition, the settlement substrate can be directly used for sessile organism larvae in the culture pond and does not need to be placed in seawater for a long time.Under the condition of no violent collision or smashing, the expected service life of the settlement substrate can be at least 50 years.

The weight of the concrete settlement substrate can be reduced by light weight aggregate concrete, and the costs of transportation, labor and the like can be reduced in the processes of preparation, transportation and maintenance of samples. The labor cost of fishermen moving the settlement substrate and harvesting the oysters can be reduced or the costs of transportation, fixing and the like can be reduced during sea farming. The risk of breaking due to careless falling onto the ground during use can be reduced.

The strength, especially the tensile strength, of the concrete can be reinforced by incorporating fibers. In the present invention, alkali-resistant fibers are combined with the concrete with ecological properties, so that the crack resistance, bending resistance and fatigue resistance of the concrete are enhanced. The early cracking of the concrete applied to breakwater members can be reduced, the damage rate of the members in the processes of transportation and seaside fixing can be reduced, and especially the capacity of resisting extreme loads such as typhoon can be improved.

The present invention further comprises the following structural characteristics:
the concrete settlement substratefor oyster is prepared from the following material components in percentage by weight: 21.8-34.5% of a cementitious material, 24.6-37.5% of lightweight coarse aggregate, 15.8-29.6% of lightweight fine aggregate, 8.4-16.4% of water, 0.6-3.0% of a dark pigment, 0.4-2.0% of biological calcium powder, 0.4-2.0% of calcium carbonate powder, 0.2-1.8% of trace elements, 0.15-1.5% of chopped fibers and 0.03-0.18% of a superplasticizer.

Preferably, the dark pigment is one or two of iron oxide black, nigrosine, carbon black, antimony sulfide, iron oxide red and organic pigment red.

Preferably, the above dark pigments are modified according to the influence degree on the concrete properties; and one of transparent resin, organosilicon, dimethylsiloxane and a superhydrophobic material is used for modification treatment.

Preferably, the biological calcium powder is bovine bone powder, and the biological calcium carbonate powder comprises one or more of oyster shell powder, fishbone powder, egg shell powder and coral powder, with fineness of 100-1,000 meshes.

Preferably, the biological calcium powder is obtained by treating the 100-500-mesh egg shell powder, coral powder, oyster shell powder and fishbone powder with one or two of acetic acid, silicic acid and sulfurous acid, and by treating the 100-500-mesh bovine bone powder with one or two of diluted phosphoric acid, sulfuric acid, hydrochloric acid and nitric acid.

Preferably, the calcium carbonate powder is calcite powder, chalk powder, limestone powder, marble powder, aragonite powder, travertine powder, and one or more of processed lightweight calcium carbonate, active calcium carbonate, calcium carbonate whiskers and ultrafine lightweight calcium carbonate, with fineness of greater than 200 meshes.

Preferably, the trace elements that are zinc, iron, potassium and phosphorus are selected from natural minerals, industrial products or chemical reagents, including one or more of zinc sulfate, calcium phosphate, zinc phosphate, potassium sulfate, potassium nitrate, ferric sulfate, ammonium nitrate, potassium phosphate, ammonium phosphate and ferric phosphate, and are modified to realize slow release of corresponding ions and to reduce or eliminate adverse effects on the concrete properties. However, for eutrophic areas, substances containing nitrogen and phosphorus elements are not selected.

Preferably, the cementitious material is one of mineral admixture added Portland cement, sulphoaluminate cement and an alkali-activated cementitious material. The mineral admixture in the mineral admixture added Portland cement comprises one or a combination of more of silica fume, slag powder and fly ash; the sulphoaluminate cement comprises one or two of rapid hardening sulphoaluminate cement, high-strength sulphoaluminate cement and expansive sulphoaluminate cement; and the alkali-activated cementitious material comprises one of alkali-activated slagpowder, and a combination of alkali-activated slagpowder and fly ash.

Preferably, the chopped fibers are inorganic fibers (12-20 mm in length) and comprise one or more of basalt fibers, alkali-resistant glass fibers and carbon fibers.

Preferably, the lightweight coarse aggregate is one or two of crushed lightweight porous basalt and lightweight ceramsite of which the maximum particle size is less than 20 mm.

Preferably, and the lightweight fine aggregate is one or two of crushed zeolite and lightweight ceramic sand, with a particle size of 0.2 to 5 mm

A preparation method of a concrete settlement substrate with a rough surface for oyster is characterized by comprising the following steps:
S1, designing different roughness according to the characteristic that oyster larvae prefer to settle or adhere to/ on the rough surface, and then manufacturing molding formworks with different roughness;
S2, weighing a cementitious material, lightweight coarse aggregate, lightweight fine aggregate, water, a dark pigment, biological calcium powder, calcium carbonate powder, trace elements, chopped fibers and a superplasticizer;
S3, firstly putting the lightweight coarse aggregate and the lightweight fine aggregate into a concrete mixer to be mixed for 0.5-1 min; then adding the cementitious material, the dark pigment, the biological calcium powder, the calcium carbonate powder and the trace elements, and continuously mixing for 1-2 min; then adding the chopped fibers, the water and the superplasticizer, and mixing for 2-6 min; then carrying out casting and consolidating after uniformly mixing; and
S4, putting a concrete sample after demoulding into a high-concentration CO₂curing chamberfor curing for 0.5-5 h according to the situation so as to reduce the alkalinity of the concrete sample, and then carrying out standard curing for 28 d or curing according to the actual situation.

Thus, the concrete settlement substrate with the rough surface for oyster and a good induction effect can be prepared.

An objective of the present invention is to provide a marine ecological engineering construction method. Through the method, a marine engineering can be constructed, oysters can be quickly and compactly settled to the surface of the marine engineering, the durability of the marine engineering can be improved, the oysters are used as ecological engineers to purify water and restore ecology, and high ecologicalization of the marine engineering can be achieved.

The present invention is achieved as that: the construction method comprises the following steps:
(1) surveying a sea area of an ecological engineering construction position;
(2) preparing a concretesettlement substrate;
(3) Regularandquantitativecollecting and cultivating oyster larvae;
(4) designing a concrete member;
(5) manufacturing the concrete member;
(6) placing concrete samples;
(7) placing the oyster settlement substrate on site; and
(8) monitoring and managing the larvasettlement.

The specific technical solution is as follows:
The surveying of the sea area of the ecological engineering construction position in the step (1) comprises the step of surveying dominant species of oysters in the sea area and whether the oysters are settled, surveying air temperature, seawater temperature, dissolved oxygen, plankton, total dissolved inorganic nitrogen, active phosphate, active silicate, Ca²⁺, Zn²⁺, K⁺and the like for the sea area at different seasons, and surveying typhoon times, strength and the like over the years.

The manufacturing of the concrete settlement substrate in the step (2) comprises the step of preparing a lightweight concrete settlement substrate with a rough surfacefor oyster, wherein the shape of the concrete settlement substratefor oyster is one of the shapes of a plate-shaped settlement substrate, a wave-shaped settlement substrate and a cylindrical settlement substrate.

The regular and quantitative collecting and cultivating of the oyster larvae in the step (3) comprises the step of placing the settlement substrate in a larva collection area of a nearby sea area in the concentration period of settlement and metamorphosisof oyster planktonic larvae in the local sea area, stopping collecting the larvae when the amount of settled oyster larvae is 15-25 larvae/100 cm², and then moving the settlement substrate to a sea area with rich baits for floating cultivation.

The designing of the concrete member in the step (4) comprises the step of performing ecological engineering concrete member configuration design by considering the influence of oyster settlement on the environment and wave absorption, wherein in order to increase the settlement quantity of oysters as much as possible and provide space for other organisms, a thin-wall and multi-opening member is adopted, the internal voidage is more than 40%, multiple inclined columns are arranged on the member, and the size of the member is 0.5-15 cm³.

The manufacturing of the concrete memberin the step (5) comprises the step of manufacturing the member with a special shape, in particular a groove structure with a large inside and a small outside, by fiber-reinforced ecological concrete with significant inductive effect for marine sessile organism and through an elastic mold; and determining the curing method according to the concrete mixture proportions and the alkalinity and the impermeability.

The placing of the concrete samples in the step (6) comprises the step of in theconcentration period of settlement and metamorphosis of the oyster planktonic larvae in the local sea area of the next year, adopting a dispersed placement method, considering the interaction of a plurality of samples, and connecting the concrete samples by or adopt ropes.

The placing of the oyster settlement substrate on site in the step (7) comprises the step of conveying the oyster settlement substrateonwhich the gonad of oysters develops into mature stage to the sea area for constructing the marine ecological engineering, placing one lightweight concrete settlement substrate with the rough surface for oysteron each member and fixing the lightweight concrete settlement substratefor oysteron the concrete member through ropes; in addition, feeding algae or replenishing nutritive saltsif necessary according to the planktonic condition of the local sea area.

The monitoring and managing the state of the larva settlement in the step (8) comprise the step of monitoring the settlement condition of the oyster larvae on the concrete surface; when the larva settlement density is 30 to 40 larvae/100 cm², moving away the lightweight concrete settlement substrate with the rough surfacefor oyster, monitoring the ecological condition of a breakwater for a long time, and providing improvement measures according to the actual condition.

The concentration period of settlement and metamorphosisof the oyster planktonic larvae in the step (6) is generally May to August in the north and is generally April to October in the south.

The internal voidage of the thin-wall multi-opening member in the step (4) is more than 40-90%, and multiple inclined columns are arranged on the thin-wall multi-opening member; the thin-wall multi-opening member comprises a base, a thin-wall hollow concrete shell is connected to the base, and at least six concrete rod members are arranged on the shell. The shell can be a sphere or a plate; and the concrete rod members can be discs or plates.

A concrete curing method as described in the specific measure in the step (5) is that a concrete curing method adopted is that a curing method and a curing time of the concrete are determined according to the concretemix; for the concrete prepared by Portland cement, CO₂ curing is adopted, and the curing time is 0.5-5 h.

Round holes with the diameter of 3-5 mm are reserved in the cement-based ecological settlement substrate as described in the specific measure in the step (2) during molding, and the size of the plat-shaped settlement substrate is 10 × 10 × 2-3 cm.

The rope as described in the specific measure in the step (7) is one of a coir rope, a glass fiber rope and a basalt fiber rope.

The lightweight concrete settlement substrate with the rough surface as described in the specific measure in the step (2) comprises the following material components in percentage by weight: 21.8-34.5% of the cementitious material, 24.6-37.5% of lightweight coarse aggregate, 15.8-29.6% of lightweight fine aggregate, 8.4-16.4% of water, 0.6-3.0% of the dark pigment, 0.4-2.0% of biological calcium powder, 0.4-2.0% of calcium carbonate powder, 0.2-1.8% of trace elements, 0.15-1.5% of chopped fibers and 0.03-0.18% of the superplasticizer.

Preferably, the dark pigment is one or two of iron oxide black, nigrosine, carbon black, antimony sulfide, iron oxide red and organic pigment red.

Preferably, the above dark pigments are modified according to the influence degree on the concrete properties; and one of transparent resin, organosilicon, dimethylsiloxane and a superhydrophobic material is used for modification treatment.

Preferably, the biological calcium powder is bovine bone powder, and the biological calcium carbonate powder comprises one or more of oyster shell powder, fishbone powder, egg shell powder and coral powder, with fineness of 100-1,000 meshes.

Preferably, the biological calcium powder is obtained by treating the 100-500-mesh egg shell powder, coral powder, oyster shell powder and fishbone powder with one or two of acetic acid, acetic acid aqueous solution, silicic acid and sulfurous acid, and by treating the 100-500-mesh bovine bone powder with one or two of diluted phosphoric acid, sulfuric acid, hydrochloric acid and nitric acid.

Preferably, the calcium carbonate powder is calcite powder, chalk powder, limestone powder, marble powder, aragonite powder, travertine powder, and one or more of processed lightweight calcium carbonate, active calcium carbonate, calcium carbonate whiskers and ultrafine lightweight calcium carbonate, with fineness of greater than 200 meshes.

Preferably, the trace elements that are zinc, iron, potassium and phosphorus are selected from natural minerals, industrial products or chemical reagents, including one or more of zinc sulfate, calcium phosphate, zinc phosphate, potassium sulfate, potassium nitrate, ferric sulfate, ammonium nitrate, potassium phosphate, ammonium phosphate and ferric phosphate, and are modified to realize slow release of corresponding ions and to reduce or eliminate adverse effects on the concrete properties. However, for eutrophic areas, substances containing nitrogen and phosphorus elements are not selected.

Preferably, the cementitious material is one of mineral admixture added Portland cement, sulphoaluminate cement and an alkali-activated cementitious material. The mineral admixture in the mineral admixture added Portland cement comprises one or a combination of more of silica fume, slag powder and fly ash; the sulphoaluminate cement comprises one or two of rapid hardening sulphoaluminate cement, high-strength sulphoaluminate cement and expansive sulphoaluminate cement; and the alkali-activated cementitious material comprises one of alkali-activated slagpowder, and a combination of alkali-activated slagpowder and fly ash.

Preferably, the chopped fibers are inorganic fibers (12-20 mm in length) and comprise one or more of basalt fibers, alkali-resistant glass fibers and carbon fibers.

Preferably, the lightweight coarse aggregate is one or two of crushed lightweight porous basalt and lightweight ceramsite of which the maximum particle size is less than 20 mm.

Preferably, and the lightweight fine aggregate is one or two of crushed zeolite and lightweight ceramic sand, with a particle size of 0.2 to 5 mm

A preparation method of a concrete settlementsubstratefor oyster comprises the following steps:
S1, designing different roughness according to the characteristic that oyster larvae prefer to settleto rough substrate surface, and then manufacturing molding formworks with different roughness;
S2, weighing a cementitious material, lightweight coarse aggregate, lightweight fine aggregate, water, a dark pigment, biological calcium powder, calcium carbonate powder, trace elements, chopped fibers and a superplasticizer;
S3, firstly putting the lightweight coarse aggregate and the lightweight fine aggregate into a concrete mixer to be mixed for 0.5-1 min; then adding the cementitious material, the dark pigment, the biological calcium powder, the calcium carbonate powder and the trace elements, and continuously mixing for 1-2 min; then adding the chopped fibers, the water and the superplasticizer, and mixing for 2-6 min; then carrying out casting and consolidating after uniformly mixing; and
S4, putting a concrete sample after demoulding into a high-concentration CO₂curing chamber for curing for 0.5-5 h according to the situation so as to reduce the alkalinity of the concretesample, and then carrying out standard curing for 28 d or curing according to the actual situation.

Thus, the concrete settlement substrate with the rough surface for oyster and a good induction effect can be prepared.

The fiber-reinforced ecological concrete as described in the special measure in the step (5) is specifically prepared from, by weight, 12.5-22.0% of the cementitious material, 39.4-49.8% of crushed stone, 24.9-37.3% of sand, 6.2-8.7% of water, 0.2-1.7% of the dark pigment, 0.15-1.0% of biological calcium powder, 0.15-1.0% of calcium carbonate powder, 0.1-1.0% of trace elements, 0.1-1.0% of chopped fibers and 0.02-0.1% of the superplasticizer.

The fiber-reinforced ecological concrete as described in the special measure in the step (5) is prepared from the following raw materials:
Preferably, the dark pigment is one or two of iron oxide black, nigrosine, carbon black, antimony sulfide, iron oxide red and organic pigment red. The above pigments are modified according to the influence degree on the concrete properties; and one of transparent resin, organosilicon, dimethylsiloxane and a superhydrophobic material is used for modification treatment.

Preferably, the biological calcium powder is bovine bone powder; and the biological calcium carbonate powder comprises one or a combination of more of oyster shell powder, fishbone powder, egg shell powder and coral powder, with fineness of 100-1,000 meshes.

Preferably, the biological calcium powder is modified by a method for treating the 100-500-mesh egg shell powder, coral powder, oyster shell powder and fishbone powder with one or two of acetic acid, silicic acid and sulfurous acid, and treating the 100-500-mesh bovine bone powder with one or two of diluted phosphoric acid, sulfuric acid, hydrochloric acid and nitric acid.

Preferably, the calcium carbonate powder is calcite powder, chalk powder, limestone powder, marble powder, aragonite powder, travertine powder powder, and one or more of processed lightweight calcium carbonate, active calcium carbonate, calcium carbonate whiskers and ultrafine lightweight calcium carbonate, with fineness of greater than 200 meshes.

Preferably, the trace elements that are zinc, iron, potassium and phosphorus are selected from natural minerals, industrial products or chemical reagents, including one or more of zinc sulfate, calcium phosphate, zinc phosphate, potassium sulfate, potassium nitrate, ferric sulfate, ammonium nitrate, potassium phosphate, ammonium phosphate and ferric phosphate, and are modified to realize slow release of corresponding ions and to reduce or eliminate adverse effects on the concrete performance. However, for eutrophic areas, substances containing nitrogen and phosphorus elements are not selected.

Preferably, the chopped fibers are inorganic fibers (12-40 mm in length) and comprise one or more of basalt fibers, alkali-resistant glass fibers and carbon fibers.

Preferably, the cementitious material is one of mineral admixture added Portland cement, sulphoaluminate cement and an alkali-activated cementitious material. The mineral admixture in the mineral admixture added Portland cement comprises one or a combination of more of silica fume, slag powder and fly ash; the sulphoaluminate cement comprises one or two of rapid hardening sulphoaluminate cement, high-strength sulphoaluminate cement and expansive sulphoaluminate cement; and the alkali-activated cementitious material comprises one of alkali-activated slagpowder, and a combination of alkali-activated slag powderand fly ash.

Preferably, sand is one or more of river sand, machine-made sand (basalt or granite as parent rock) or desalinated sea sand.

A preparation method of the fiber-reinforced ecological concrete comprises the following steps:
S1, accurately weighing a cementitious material, crushed stone, sand, water, a dark pigment, biological calcium powder, calcium carbonate powder, trace elements, chopped fibers and a superplasticizer; and
S2, firstly, putting the crushed stone and the sand into a concrete mixer for mixing for 0.5-1 min; then adding the cementitious material, the dark pigment, the biological calcium powder, the calcium carbonate powder and the trace elements, and continuously mixing for 0.5-1 min; then adding the chopped fibers, the water and the superplasticizer, and mixing for 3-8 min; after uniform mixing, casting, consolidating, and then performing standard curing for 28 d or curing according to actual conditions to obtain the fiber-reinforced ecological concrete.

The fiber-reinforced ecological concrete as described in the specific measure in the step (5) comprises the following raw materials in percentage by weight: 0.2-1.7% of the dark pigment, 12.5-22.0% of the cementitious material, 39.4-49.8% of crushed stone, 24.9-37.3% of sand, 6.2-8.7% of water and 0.02-0.1 % of the superplasticizer.

The fiber-reinforced ecological concrete as described in the specific measure in the step (5) comprises the following raw materials in percentage by weight: 0.15-1.37% of bovine bone powder, 12.5-22.0% of a cementitious material, 39.4-49.8% of crushed stone, 24.9-37.3% of sand, 6.2-8.7% of water and 0.02-0.1% of a superplasticizer.

The fiber-reinforced ecological concrete as described in the specific measure in the step (5) comprises the following raw materials in percentage by weight: 0.15-1.37% of calcium carbonate powder, 12.5-22.0% of a cementitious material, 39.4-49.8% of crushed stone, 24.9-37.3% of sand, 6.2-8.7% of water and 0.02-0.1% of a superplasticizer.

The present invention has the beneficial effects that:
in the present invention, a diluted acid modification technology and a composite grinding technology are adopted in a control way, the induction capability of the bovine bone powder is fully exerted, the dosage of the bovine bone powder is greatly reduced, and anti-corrosion treatment and modification are carried out, so that a composite inducer taking the bovine bone powder as a main component is realized, the dosage of the composite inducer is small, the strength and permeability of concrete are hardly influenced, meanwhile, the composite inducer has significant inductive effect on larval settlement,, and the problem of mildewing of the concrete is solved. Compared with concrete without the inducer, the concrete with the inducer enables the number of settled oyster larvae to be obviously increased.

The present invention constructs the marine engineering, more oysters can be compactly settled to the marine engineering, thus the durability of the marine engineering can be improved; and based on the characteristics that the oysters are used as ecological engineers and can purify water bodies and improve the water areas, high ecologicalization of the marine engineering can be realized.

### BRIEF DESCRIPTION OF DRAWINGS

Fig. 1 shows mildewing condition on a surface of different concrete mix with 10% bovine bone powder (under standard curing);
Fig. 2 shows different concretemix adding 10% modified bovine bone powder with a fineness larger than 200 meshes;
Fig. 3 is apicture of 210 d of asettlement experimentinsea;
Fig. 4 is a pictureof 300 d of asettlement experiment insea;
Fig. 5 is a picture of a concrete settlement substratefor oyster;
Fig. 6 is a picture of a concrete settlement substratefor oyster;
Fig. 7 is a picture of a concrete settlement substratefor oyster;
Fig. 8 is a design picture of a bionic concrete member.
wherein in Fig. 8, 1-concrete thin shell with a thickness about 5 cm; 2-strip-shaped columnar antenna with a length about 1.5 m; 3-thin shell structure base; 4-columnar connecting and reinforcing area; and 5-through holes with different diameters.

### DETAILED DESCRIPTION OF EMBODIMENTS

The present invention would be described in further detail below with reference to the accompanying drawings and specific examples.

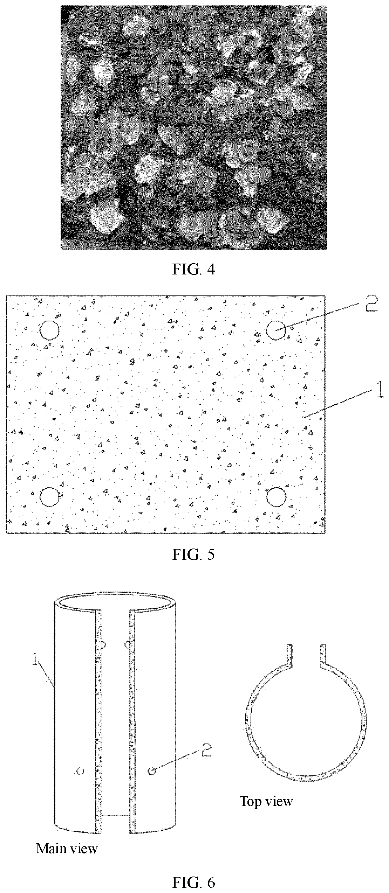

These examples were only used to illustrate the present invention and did not limit the scope of the present invention. Examples 1 to 21 had the same implementation methods, and the concrete mixwas as shown in the following examples. The present invention used the above concrete to design concrete settlement substrates of different shapesfor oyster, as shown in Figs. 5-7.

Example 1: According to the concrete mix of ordinary Portland cement, the mix ratios by weight of ordinary Portland cement, lightweight coarse aggregate, lightweight fine aggregate, water and polycarboxylate superplasticizer powder were 29.37%, 33.53%, 24.48%, 12.59% and 0.03% in a sequence.

Wherein the lightweight coarse aggregate was one or two of crushed lightweight porous basalt and lightweight ceramsite of which the maximum particle size was less than 20 mm. The lightweight fine aggregate was one or two of crushed zeolite and lightweight ceramic sand, had the particle size of 0.2 to 5 mm and was well graded. The water should meet the concrete water standard (JGJ63-2006), the Cl⁻ content was less than 1,000 mg/L, the pH value was more than 4.5, and the influence on the initial setting time, final setting time, strength and permeability of cement was small. In the Examples 1 to 21, the above materials were the same.

Example 2: According to the reference concrete mix, the mix ratios by weight of ordinary Portland cement, silica fume, blast furnace slag powder, lightweight coarse aggregate, lightweight fine aggregate, water and polycarboxylate superplasticizer powder were 17.62%, 1.47%, 10.28%, 33.53%, 24.48%, 12.59% and 0.03% in a sequence.

Example 3: The mix ratios by weight of an unmodified dark pigment, ordinary Portland cement, silica fume, blast furnace slag powder, lightweight coarse aggregate, lightweight fine aggregate, water and polycarboxylate superplasticizer powder were 1.47%, 17.62%, 1.29%, 8.99%, 33.53%, 24.48%, 12.59% and 0.03% in a sequence.

Example 4: The mix ratios by weight of a modified dark pigment (the mass ratio of iron oxide black to an aniline black mixture was 1: 1), ordinary Portland cement, silica fume, blast furnace slag powder, lightweight coarse aggregate, lightweight fine aggregate, water and polycarboxylate superplasticizer powder were 0.87%, 17.62%, 1.36%, 9.52%, 33.53%, 24.48%, 12.59% and 0.03% in a sequence.

Example 5: The mix ratios by weight of a modified dark pigment (the mass ratio of iron oxide black to an aniline black mixture was 1: 1), ordinary Portland cement, silica fume, blast furnace slag powder, lightweight coarse aggregate, lightweight fine aggregate, water and polycarboxylate superplasticizer powder were 1.47%, 17.62%, 1.29%, 8.99%, 33.53%, 24.48%, 12.59% and 0.03% in a sequence.

Example 6: The mix ratios by weight of a modified dark pigment (the mass ratio of iron oxide black to an aniline black mixture was 1: 1), ordinary Portland cement, silica fume, blast furnace slag powder, lightweight coarse aggregate, lightweight fine aggregate, water and polycarboxylate superplasticizer powder were 2.35%, 17.62%, 1.17%, 8.23%, 33.53%, 24.48%, 12.59% and 0.03% in a sequence.

Wherein the modified dark pigment was prepared by the following steps: mixing 196 transparent resin, 3% of a hardener and 1.5% of an accelerator, wherein the volume ratio of the pigment to the resin was 1: 0.2, curing at a normal temperature for 4 h, curing at 60°C for 4 h, breaking, and grinding with a vibration mill until the fineness was greater than 400 meshes.

Example 7: The mix ratios by weight of calcium carbonate powder, ordinary Portland cement, silica fume, blast furnace slag powder, lightweight coarse aggregate, lightweight fine aggregate, water and polycarboxylate superplasticizer powder were 0.87%, 17.62%, 1.36%, 9.52%, 33.53%, 24.48%, 12.59% and 0.03% in a sequence.

Example 8: The mix ratios by weight of calcium carbonate powder, ordinary Portland cement, silica fume, blast furnace slag powder, lightweight coarse aggregate, lightweight fine aggregate, water and polycarboxylate superplasticizer powder were 1.47%, 17.62%, 1.29%, 8.99%, 33.53%, 24.48%, 12.59% and 0.03% in a sequence.

Example 9: The mix ratios by weight of calcium carbonate powder, ordinary Portland cement, silica fume, blast furnace slag powder, lightweight coarse aggregate, lightweight fine aggregate, water and polycarboxylate superplasticizer powder were 2.35%, 17.62%, 1.17%, 8.23%, 33.53%, 24.48%, 12.59% and 0.03% in a sequence.

Example 10: The mix ratios by weight of a modified dark pigment (the mass ratio of iron oxide black to an aniline black mixture was 1: 1), calcium carbonate powder, ordinary Portland cement, silica fume, blast furnace slag powder, lightweight coarse aggregate, lightweight fine aggregate, water and polycarboxylate superplasticizer powder were 1.47%, 0.87%, 17.62%, 1.18%, 8.23%, 33.53%, 24.48%, 12.59% and 0.03% in a sequence.

Example 11: The mix ratios by weight of a modified dark pigment (the mass ratio of iron oxide black to an aniline black mixture was 1: 1), calcium carbonate powder, ordinary Portland cement, silica fume, blast furnace slag powder, lightweight coarse aggregate, lightweight fine aggregate, water and polycarboxylate superplasticizer powder were 1.47%, 1.47%, 17.62%, 1.10%, 7.71%, 33.53%, 24.48%, 12.59% and 0.03% in a sequence.

Example 12: The mix ratios by weight of a modified dark pigment (the mass ratio of iron oxide black to an aniline black mixture was 1: 1), calcium carbonate powder, ordinary Portland cement, silica fume, blast furnace slag powder, lightweight coarse aggregate, lightweight fine aggregate, water and polycarboxylate superplasticizer powder were 1.47%, 2.35%, 17.62%, 0.99%, 6.94%, 33.53%, 24.48%, 12.59% and 0.03% in a sequence.

Example 13: The mix ratios by weight of unmodified bovine bone powder, ordinary Portland cement, silica fume, blast furnace slag powder, lightweight coarse aggregate, lightweight fine aggregate, water and polycarboxylate superplasticizer powder were 1.47%, 17.62%, 1.29%, 8.99%, 33.53%, 24.48%, 12.59% and 0.03% in a sequence.

Example 14: The mix ratios by weight of modified bovine bone powder, ordinary Portland cement, silica fume, blast furnace slag powder, lightweight coarse aggregate, lightweight fine aggregate, water and polycarboxylate superplasticizer powder were 0.87%, 17.62%, 1.36%, 9.52%, 33.53%, 24.48%, 12.59% and 0.03% in a sequence.

Example 15: The mix ratios by weight of modified bovine bone powder, ordinary Portland cement, silica fume, blast furnace slag powder, lightweight coarse aggregate, lightweight fine aggregate, water and polycarboxylate superplasticizer powder were 1.47%, 17.62%, 1.29%, 8.99%, 33.53%, 24.48%, 12.59% and 0.03% in a sequence.

Example 16: The mix ratios by weight of modified bovine bone powder, ordinary Portland cement, silica fume, blast furnace slag powder, lightweight coarse aggregate, lightweight fine aggregate, water and polycarboxylate superplasticizer powder were 2.35%, 17.62%, 1.17%, 8.23%, 33.53%, 24.48%, 12.59% and 0.03% in a sequence.

A bovine bone powder modification method comprises the following steps: adding 100-mesh bovine bone powder into a phosphoric acid solution with the concentration of 2%, wherein the weight ratio of the bovine bone powder to the phosphoric acid solution was 1: 3, and the temperature was 20-30°C; stirring in a stirrer at a rotating speed of 200-500 rpm for 30 min, centrifuging for 3 min by a centrifugal machine at a rotating speed of 3,000-5,000 rpm, pouring out the supernatant, and washing the centrifuged solid substance for 2-3 times by using water until washing water did not show acidity anymore; and performing vacuum drying on the centrifuged solid substance at the temperature of 40°C, grinding the dried bovine bone powder and slag powder in a mass (weight) ratio of 1: 4 by using a vibration mill until the fineness was more than 200 meshes, and standing for later use.

Example 17: The mix ratios by weight of calcium carbonate powder, zinc sulfate, a modified dark pigment (the mass ratio of iron oxide black to an aniline black mixture was 1: 1), ordinary Portland cement, blast furnace slag powder, silica fume, lightweight coarse aggregate, lightweight fine aggregate, water and polycarboxylate superplasticizer powder were 2.35%, 0.5%, 1.47%, 17.62%, 0.93%, 6.50%, 33.53%, 24.48%, 12.59% and 0.03% in a sequence.

Example 18: The mix ratios by weight of calcium carbonate powder, zinc sulfate, a modified dark pigment (the mass ratio of iron oxide black to an aniline black mixture was 1: 1), ordinary Portland cement, blast furnace slag powder, silica fume, lightweight coarse aggregate, lightweight fine aggregate, water and polycarboxylate superplasticizer powder were 2.35%, 1.2%, 1.47%, 17.62%, 0.84%, 5.89%, 33.53%, 24.48%, 12.59% and 0.03% in a sequence.

Example 19: The mix ratios by weight of zinc sulfate, a modified dark pigment (the mass ratio of iron oxide black to an aniline black mixture was 1: 1), modified biological calcium powder (the mass ratio of modified bovine bone powder to oyster shell powder was 2: 1), calcium carbonate powder, ordinary Portland cement, silica fume, blast furnace slag powder, crushed stone, sand, water and polycarboxylate superplasticizer powder were 0.5%, 1.47%, 1.47%, 0.87%, 17.62%, 0.94%, 6.50%, 33.53%, 24.48%, 12.59% and 0.03% in a sequence.

Example 20: The mix ratios by weight of zinc sulfate, a modified dark pigment (the mass ratio of iron oxide black to an aniline black mixture was 1: 1), modified biological calcium powder (the mass ratio of modified bovine bone powder to oyster shell powder was 2: 1), calcium carbonate powder, ordinary Portland cement, silica fume, blast furnace slag powder, crushed stone, sand, water and polycarboxylate superplasticizer powder were 0.6%, 1.47%, 1.47%, 0.87%, 17.62%, 0.92%, 6.42%, 33.53%, 24.48%, 12.59% and 0.03% in a sequence.

A modification method of zinc sulfate comprises the following steps: selecting diatomite with SiO₂ content of more than 90% and fineness of 600 meshes, adding 150 g of water into a stirrer at 60°C, then adding 100 g of zinc sulfate, stirring until the zinc sulfate was completely dissolved, and standing for later use; and then heating 150 g of diatomite to 60°C, adding the diatomite into the solution, stirring for 10 min in a stirrer at a rotating speed of 200-500 rpm, and then drying in a drying oven with a temperature of 100°C, thus obtaining the modified zinc sulfate.

Example 21: The mix ratio by weight of zinc sulfate, a modified dark pigment (the mass ratio of iron oxide black to an aniline black mixture was 1: 1), modified biological calcium powder (the mass ratio of modified bovine bone powder to oyster shell powder was 2: 1), calcium carbonate powder, ordinary Portland cement, silica fume, blast furnace slag powder, crushed stone, sand, water, chopped fibers and polycarboxylate superplasticizer powder were 0.5%, 1.47%, 1.47%, 0.87%, 17.62%, 0.94%, 6.50%, 33.07%, 24.14%, 12.59%, 0.8% and 0.03% in a sequence.

The implementation method of the Examples 1-21 comprised the following specific operation steps:
Three disc samples with size of Φ100 × 50 mm and five plate samples with the diameter of 200 × 200 × 30 mm were prepared according to the above preparation method of the concrete settlement substrate with the rough surfacefor oyster, and were used for respectively testing the chloride ion penetration resistance of the concrete for 28 d and the settlement and metamorphosis conditions of oyster larvae in a laboratory after standard curing for 28 d. The specific operation steps were as follows:

### (I) Molding of samples

1, Ordinary Portland cement, lightweight coarse aggregate, lightweight fine aggregate, water, a dark pigment, biological calcium powder (ratio of modified bovine bone powder to oyster shell powder was 2: 1), calcium carbonate powder, trace elements, chopped fibers and polycarboxylate superplasticizer powder were accurately weighed according to the above mass;
2, Abrasive paper with different surface roughness (including 20 meshes, 60 meshes and 200 meshes) were stuck in molds of the plate samples of concrete for later use;
3, The lightweight coarse aggregate and the lightweight fine aggregate were put into a concrete mixer for mixing for 0.5-1 min; then the ordinary Portland cement, the biological calcium powder (ratio of modified bovine bone powder to oyster shell powder was 2: 1), the calcium carbonate powder, the trace elements and the dark pigment were added and continuously mixed for 0.5-1 min; the chopped fibers, the water and a superplasticizer were added and mixed for 2-6 min;after obtaining desired homogeneitymixing, casting, consolidating and demolding were performed to obtain three disc samples with the size of Φ100 × 50 mm and five plate samples with the size of 200 × 200 × 30 mm; and
4, The demouldedconcrete samples were immediately put into a CO₂curing chamber with 10 atmospheric pressures for curing for 2 h to reduce the alkalinity of the concretesamples, and standard curing was performed for 28 d; corresponding permeability evaluation was performed at each age, and oyster larva settlement and metamorphosis experiments were performed in a laboratory after 28 d.

### (II) Specific steps of a rapid chloride ion penetration experiment:

According to "Standard Test for Electrical Indication of Concrete's Ability to Resist Chloride Ion Penetration" (ASTM1202-2017), when standard curing was carried out for 28 d, three disc samples with the diameter of Φ100 × 50 mm were taken out from a curing chamber respectively, water and impurities on the surfaces of the disc samples were cleaned, and after the surfaces of the disc samples were dried, and the side surfaces of the disc samples were coated with a thin layer of epoxy resin. Then the samples were put into a vacuum water saturation machine for 20-24 h. The samples were taken out, the surfaces of the samples were cleaned, and the samples were put into polymethyl methacrylate molds, and after the sealing property between the samples and the molds was detected, a sodium chloride solution (an electrode was connected with a negative electrode of a power supply) with the mass concentration of 3% and a sodium hydroxide solution (an electrode was connected with a positive electrode of the power supply) with the molar concentration of 0.3 mol/L were respectively placedinto the molds on the two sides. An experimental instrument was started, experimental data were recorded after 6 h, and the operations were repeated on the two subsequent samples. Finally, electric flux calculation was carried out according to specifications.

### (III) Specific step of an indoor settlement and metamorphosis experiment of oyster larvae

After standard curing was carried out for 28 d, plate samples with the sizes of 200 × 200 × 30 mm were taken out from the curing room respectively, and water and impurities on the surfaces of the samples were cleaned; then the samples were put into a test pool, and the test pool was prepared in a laboratory, wherein the abundance of the oyster larvae was 0.85 ind/ml³, seawater in the pool was sand-filtered Huang Hai seawater, and the salinity was about 32-34%; after the water level of the seawater was higher than that of the concrete samples, oxygen pipes were uniformly distributed into the test pool, and the oyster larvae were prepared to be put into the test pool. After the oyster larvae were slowly and uniformly mixed in a water bucket, the mass of the seawater containing the oyster larvae was accurately weighed by using a beaker, and then the seawater was uniformly distributed into the test pool.

After an oyster settlement induction test was started, seawater in the test pool was replaced every day, the water replacement amount was 1/3 of the total capacity of the test pool, a sieve (larger than or equal to 200 meshes) was used for blocking a water outlet, non-settled oyster larvae were prevented from being lost along with water, the larvae on the sieve were put into the test pool again, chlorella was fed regularly and quantitatively through a rubber head dropper at 9 a.m. and 7 p.m. every day, and the oyster settlement condition was observed.

After the test continued to the designated age, water in the test pool was drained, the samples were taken out, the number on the surfaces of the samples were counted, recorded and survival rate of the oysters on the surfaces of the samples were analyzed, and the smooth bottom face in concrete casting molding was taken during counting.

Compared with a comparison document 1 (a novel concrete artificial fish reef and a preparation method thereof CN104529286 A), the difference was that:
The objective of the present invention was different from that of the comparison document in that: Although oyster shell powder was added into the concrete in the comparison document 1, the objective of the comparison document 1 was to utilize wastes and repair and improve the artificial fish reef. The objective of the present invention was to induce the settlement of the oyster larvae.

Compared with a comparison document 2 (a bionic concrete artificial fish reef and a preparation method thereof 2015 CN10493 83 84 A), the difference was that:
(1) The objective of the present invention was different from that of the comparison document 2 in that: Although the oyster shells or oyster shell powder was added into the concrete in the comparison document 2, the objective of the comparison document 2 was mainly achieved through the surface bionic property, including fish, microorganisms and algae, the number of the microorganisms was increased, and thus the water environment was improved; and oysters were not mentioned. The objective of the present invention was to induce the settlement of the oyster larvae.
(2) The comparison document 2 indicated that the cementreplacedbythe biological calcium carbonate powder (150-200 meshes) below 10% had no obvious effect on settlement induction. However, the modified bovine bone powder and biological calcium carbonate powder (with the fineness being 100-1,000 meshes) were adopted in the research process of the present invention, and the optimal dosage of the bovine bone powder and the biological calcium carbonate powder accounted for less than 10% of the cementitious material.
(3) The bovine bone powder and the biological calcium carbonate powder were modified and were specifically modified by treating the 100-500-mesh egg shell powder, coral powder, oyster shell powder and fishbone powder with one or two of acetic acid, acetic acid aqueous solution, silicic acid and sulfurous acid, and treating the 100-500-mesh bovine bone powder with one or two of diluted phosphoric acid, sulfuric acid, hydrochloric acid and nitric acid.
(4) Comparison document had difficulty in inlaying oyster shells on the concrete surface, the method was not adopted on each engineering surface, and the feasibility was low. In the present invention, the shell powder was added into the concrete to induce thesettlement of the sessile organisms, and the dosage of the shell powder accounted for less than 10% of the mass of the cementitious material, the construction was simple, and the settlement amount of the oyster could be greatly increased. And
(5) The phenomenon of serious artificial fish reef corrosion occurred in the marine environment for many times in recent years, and serious corrosion was mainly caused by the combined action of biological sulfuric acid secreted by anaerobic microorganism thiobacillus and acidic substances secreted by other bacteria. The acid corrosion resistance of calcium carbonate was very weak, so that serious acid corrosion could be caused by too high content of calcium carbonate with relatively high fineness.

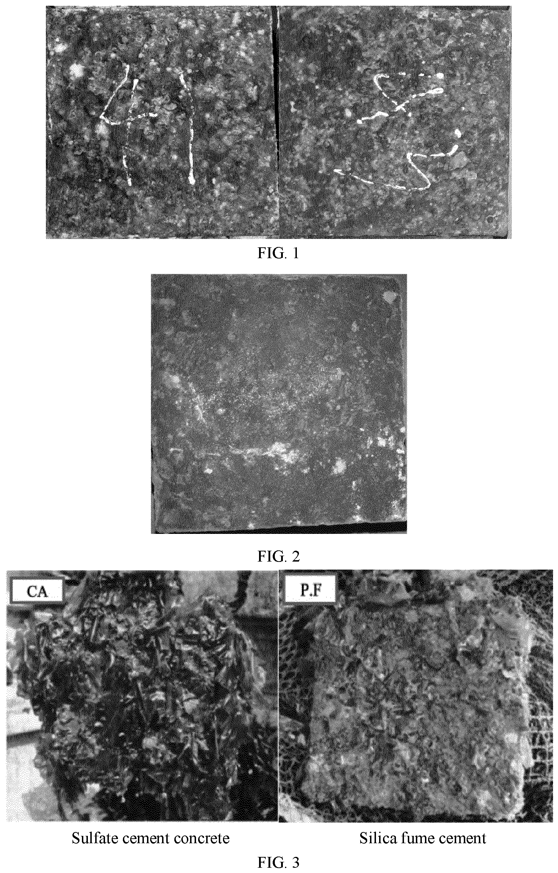

Compared with a comparison document 3 (Fan Ruiliang. Effect of the Substrate Types on Oyster Settlement, Growth, Population Establishment and Reef Development [D]), the difference was that:
(1) In the comparison document 3, 80-mesh bovine bone powder, calcium powder and gypsum powder were used and independently added into the concrete. The fineness of all calcium materials in the present invention was larger than 100 meshes and was larger than that of the materials in the comparison document 3. The bovine bone powder was also added and modified, and the concrete grain gradation and the induction capacity were considered.
(2) The bovine bone powder was ground by using a vibration mill under normal temperature conditions, when the fineness was greater than 80 meshes, the bovine bone powder contained lots of collagen and was severely agglomerated and could not be continuously ground. The diluted acid modification technology was adopted in the present invention, and the bovine bone powder was compounded with other substances and ground, so that the bovine bone powder with small particle size and modified biological calcium powder with the fineness of more than 200 meshes were obtained. The prepared biological calcium powder remained the original substances of biological calcium, greatly increased the release rate of the substances inducing oyster larvae to settle, reduced the dosage of the biological calcium powder, thereby reducing the effect on the cement concrete performance. And
(3) Due to the fact that bovine bone powder contained rich organic substances such as collagen, the strength and the penetration resistance of concrete could be reduced when a large amount of the substances were added, especially after the dosage exceeded 5%, the strength of the concrete was rapidly reduced, the penetration resistance was remarkably reduced, and mildew could grow on the surface of the concrete under the standard curing condition. Fig. 1 showed the mildewing condition of the concrete samples. Fig. 2 showed the surface condition of the modified concrete.

As shown in Fig. 1, mildew on the surface of concrete was white flocculent and almost covered the whole surface of the concrete; under the same bovine bone powderdosage, age and curing conditions, the surface of the concrete in Fig. 2 was not mildewed.
in the present invention, a diluted acid modification technology and a composite grinding technology are adopted in a control way, the induction capability of the bovine bone powder is fully exerted, the dosage of the bovine bone powder is greatly reduced, and anti-corrosion treatment and modification are carried out, so that a composite inducer taking the bovine bone powder as a main component is realized, the dosage of the composite inducer is small, the strength and permeability of concrete are hardly influenced, meanwhile, the composite inducer has very strong oyster larvasettlement capability, and the problem of mildewing of the concrete is solved. Compared with concrete without the inducer, the concrete with the inducer enables the number of settled oyster larvae to be obviously increased.

The comparison documents and consulted literature data showed that the calcium content was very important for the settlement of the oyster larvae, and some experimental results at present also proved that the settlement and the growth of the oyster larvae could be promoted by adding a proper dosage of calcium carbonate substances into a cement-based material. However, cement concrete contained a large number of calcium ions, the pH value in a pore solution was generally greater than 12.5, and the pH value of a saturated calcium hydroxide solution was about 12 at normal temperature, thus the concentration of the calcium ions in the pore solution of the concrete was about 5 mmol/L; and the solubility of calcium carbonate was very small and was only 9.5 × 10⁻⁵ mol/L (9.5 × 10⁻² mmol/L) at 25°C. At present, the optimal range of the concentration of the calcium ions for inducing the settlement of the oysters was 10-25 mmol/L, and even if the oyster larvae were placed in the saturated calcium carbonate solution, the concentration of Ca²⁺ was not enough to provide the appropriate ion concentration for thesettlement of the oysters. Further, Ca(OH)₂ in the cement concrete could be released more quickly, and the dissolution of the calcium carbonate needed a longer time. Therefore, it could be understood or inferred that the calcium carbonate material added into the concrete could promote the settlement of the oyster larvae, and the Ca²⁺ did not play a leading role. The early settlement and metamorphosis of the oysters were related to HCO₃⁻, and the secondary shells of the calcium carbonate were generated by HCO₃⁻ together with the Ca²⁺ during metamorphosis. After the calcium carbonate was added, the calcium carbonate reacted with CO₂ and water to generate Ca(HCO₃)₂ to participate in the settlement, which was a fundamental mechanism for promoting the settlement of the oyster larvae.

There was an optimum dosage in the dosage of calcium carbonate in the cement-based material, which could be explained from the following three aspects:
1) For equivalent substituted cement, the alkali in the concrete was diluted along with the increase of the dosage of the calcium carbonate, and the total alkalinity was reduced; however, along with the increase of the dosage of the calcium carbonate, the dissolution probability of the calcium carbonate in the concrete was increased, and the content of HCO₃⁻ in the solution was increased, thus the settlement and the metamorphosis of the oysters were promoted; however, when the dosage was too large, the permeability of the concrete was increased sharply, and the alkali and carbonate radicals in the concrete were quickly leached, so that the negative effect of the alkali was prominent, and the critical or negative effect of the carbonate radicals was initially prominent, thus the settlement amount was reduced;
2) For equivalent substituted aggregate, the permeability of the concrete was reduced along with the increase of the dosage, consequently, the leach of calcium ions and OH⁻ was reduced, but the leach rate of carbonate ions was gradually increased first, and when theleach rate reached a certain value, oyster settlement reached a maximum value; and along with the continuous increase of the dosage, the reduction amplitude of the calcium ions was large, and the carbonate radicals were possibly reduced, thus the settlement of the oyster larvae was limited by the concentration of the calcium ions, and the settlement was reduced; and
3) For equivalent substituted mineral admixture, the permeability was increased along with the increase of the dosage, and the HCO₃⁻ concentration reached a proper range for the oyster settlement due to the increase of calcium carbonate, which indicated the increase of the settled oyster larvae; and along with the continuous increase of the dosage of the mineral admixture, the dosage of the mineral admixture was reduced, so the amount of leaching alkali was increased, the carbonate radicals were increased, and the settlement of the oyster larvae was inhibited by excessive alkali and HCO₃⁻ ions.

Compared with a comparison document 4 (Li Zhenzhen, Gong Pihai, Guan Changtao, et al, Study on the Organisms Attachment of Artificial Reefs Constructed with Five Different Cements[J]. Progress in Fishery Sciences, 2017, 38(5):57-63], the difference was that:
In the comparison document 4, composite Portland cement, slag Portland cement, pozzolanic Portland cement, fly ash Portland cement and aluminate cement were used. In the present invention, low-alkalinity cement was achieved by ordinary Portland cement addingmineral admixtures; silica fume was one of the mineral admixtures and had high activity, and optimum dosage of silica fume could achieve obvious effect on increasing the durability of reinforced concrete in the marine environment. Low-alkalinity cement with the excellent strength and durability could be obtained through optimization design and experiments. Meanwhile, by means of the high penetration resistance characteristic of the silica fume concrete, even if the alkalinity in the concrete was high, a large number of oyster larvae still adhered to, metamorphosized and grew on the concretesurface. The low-alkalinity sulphoaluminate cement was compounded to regulate and control the alkalinity of the cement concrete, and thus an appropriate pH value was provided for oyster larvasettlement. In addition,comparedtomarine plants, oysters, barnacles and other sessile organisms were different in alkali resistance, the environments needed in the settlement period and later period were different, for example, a large number of calcium ions were needed for settlement, metamorphosis and later-period growth of the barnacles and the oysters.

In the comparison document 4, the concrete was used for enriching marine organisms, focusing on the amount and diversity of settled biomass, and the mainly settled organisms were various algae and the like. The research objective of the present invention was to induce the settlement of the oysters, but the alkalinity tolerance of oysters and barnacles was higher than that of algae, and a large amount of calcium ions were needed for settlement and metamorphosis of the oysters, so that the two kinds of concrete looked like the same, but in fact there was a big difference. Fig. 3 and Fig. 4 respectively showed the oyster settlement comparison conditions between the comparison document 4 after performing the real sea settlement experiment for about 210 d and the present invention after performing the real sea settlement experiment for 300 d.

In addition, the present invention has the unique characteristics and the following beneficial effects:

### Dark pigment

The light-shielding characteristic of oyster eyespot larvae was utilized, the dark pigment (one or two of iron oxide black, nigrosine, carbon black, antimony sulfide, iron oxide red and organic pigment red) were doped into the concrete, the color of the concrete was changed and darkened, the concrete was regarded as a dark environment by the oyster larvae, thus the oyster larvae were induced to reach the dark concrete surface, the contact probability of the larvae and the concrete surface were increased, and the induced settlement rate of the oyster larvae was increased.

### Specifically:

Marine organism researchers carried out the research on the settlement of marine sessile organisms by substrates with different colors in order to cultivation and propagationor eliminate unexpected populations, which belonged to the marine organism discipline. The marine organism discipline was quite different from the marine concrete engineering or concrete material discipline, they were completely two major disciplines. Through the crossing of the marine sessile organism discipline and the concrete discipline, the induced settlement of the oyster larvae by dark concrete was realized. In the present invention, the dark pigment was added to deepen the surface color of concrete so as to promote the settlement of the oyster larvae. Other materials were added in the concrete, which could affect the properties of the concrete. In the present invention, in consideration of the concrete of different cements, there was a difference in surface color of the concrete. Therefore, the dosage of the dark substances could be determined according to the type and dosage of the cement. The dark pigment also affected the properties of the concrete. Most importantly, when the dark pigment was added, if the penetration rates of alkali, Ca²⁺and the like in the concrete were not controlled, the leached alkali could affect the settlement, metamorphosis and growth of the sessile organism larvae, and when the dosage was greater than a certain value, the settlement amount of the larvae was reduced. In the present invention, the penetration resistance of the concrete was designed and controlled, and the main measures were as follows: selection of the type of the dark pigment, control of the dosage and modification. With the increase of the dosage of the dark pigment, the settlement rate of the larvae was increased first, and when the dosage accounted of 0.5%-6% of the cementitious material, the settlement amount of the larvae was maximum, but was slightly increased or kept unchanged later.

### Trace elements

A large amount of zinc was enriched in the oyster body, and zinc concentration was far higher than that in the seawater in which the oyster lives, and meanwhile, the oyster body further contains more Fe, P and K elements. Meanwhile, proper concentration of Zn²⁺ and K⁺ in the solution could promote early settlement and metamorphosis of the oyster larvae. Therefore, zinc sulfate, potassium sulfate, potassium nitrate, ferric sulfate, zinc phosphate, ammonium nitrate, potassium phosphate, ammonium phosphate, ferric phosphate and calcium phosphate were adopted as the trace elements to be doped into the concrete, and these substances were modified to enable the strength and the penetration resistance of the concrete to be basically kept unchanged, and thus the induced settlement rate of the oyster larvae was greatly increased. Specifically:

Marine organism researchers carried out the research on the settlement and metamorphosis of different ions to marine sessile organisms in order to clarify oyster settlement mechanisms and cultivationpropagation, which belonged to the marine organism discipline. The marine organism discipline was quite different from the marine concrete engineering or concrete material discipline, they were completely two major disciplines. Through the crossing of the marine sessile organism discipline and the concrete discipline, corresponding substances were added into the concrete to induce the oyster larvae to settle on the surface of the concrete. Soluble salts had great influence on the properties of the concrete, such as influence on early workability, setting time and later strength and penetration resistance. Diatomite was adopted as a carrier in the present invention, the inorganic salts were fixed in the diatomite, thus the influence of the soluble salts on the properties of the concrete was reduced. Meanwhile, the effect of improving the properties of the concrete by the diatomite was utilized to keep good mechanical property and penetration resistance of the concrete when these inducing substances were added. In addition, diatomite serving as the carrier had a slow release effect, thus soluble salt was released slowly, and particularly, the release was kept at a very low rate after the diatomite was soaked in seawater for a certain period of time. Therefore, the above knowledge related to crossing of the marine sessile organism discipline, chemistry and marine concrete engineering disciplines, and technicians in the fields of concrete and engineering or the field of marine organisms could not obtain the technical characteristics of close correlation between the technology of doping the trace elements into the concrete to change the ion content of the trace elements on the surface of the concrete and control the permeability of the concrete and the concrete with the capability of efficiently inducing the settlement of the oysters through the existing background.

### Concrete permeability

The strength and permeability of concrete were two main properties of the concrete. Different inducers added into reference concrete could influence the properties of the concrete. Therefore, when different substances were added to promote settlement, metamorphosis and later growth of the oyster larvae, it must be integrally controlled to make sure that the different substances did not have a big impact on the strength and permeability of the concrete, and then raw materials were selected according to the compatibility of various raw materials. If the properties of the raw materials could not meet the actual requirements, the raw materials were modified and then added so as to achieve the expected functions. In practice, although related research was performed by considering the influence of the dosage of calcium on oyster larva settlement, the properties of concrete, the water-cement ratio, the dosage of calcium, maintenance and the like were not considered, moreover, the leakage rate of alkali and ions in the concrete could be changed due to the change of the permeability of the concrete, the poorer the penetration resistance of the concrete was, the higher the leakage rate of the alkali and the ions in the concrete was, and the leakage rate might be exponentially increased. Therefore, the leached alkali and ions could greatly influence the larvae, a change from promoting settlement to inhibiting settlement might occur, and particularly when the content of cement was large, the situation was more serious. Therefore, when the inducer was added into the concrete, it must be guaranteed that the change of the penetration resistance of the concrete was within a controllable range, for example, the change could not exceed 10%. In this way, the induction effects could be compared, otherwise, the influence of single inducer addition or inducer composite addition on the induction effect of the oyster larvae could not be evaluated.

Only the optimum environment required by settlement, metamorphosis and later growth of marine sessile organisms was mastered, and concrete could be designed from the penetration resistance level of the concrete instead of only considering the dosage of various raw materials and ignoring the penetration resistance change of the concrete. Therefore, the above knowledge related to crossing of the marine sessile organism discipline, chemistry and marine concrete engineering disciplines, and technicians in the fields of concrete and engineering or the field of marine organisms could not obtain the technical characteristics of close correlation between the integral control technology of the penetration resistance of the concrete and the technology of promoting the capability of inducing the settlement of the oysters by the inducer through the existing background.

### Roughness gain

The rough surface provided better tactile stimulation and increased the settlement force for the oyster larvae to crawl and settle, and the retention time of the oyster larvae on the substrate was increased; meanwhile, existing cracks and pits could protect the larvae and reduce the invasion probability of preys; compared with a smooth settlement substrate, this settlement substrate had a larger attachable area, so that the increase of the settlement rate of the oyster larvae on the settlement substrate with the rough surface was promoted.

In addition, fibers could reinforce the strength, especially the tensile strength, of the concrete. In the present invention, alkali-resistant fibers were combined with the concrete with ecological properties, so that the crack resistance, bending resistance and fatigue resistance of the concrete were enhanced. The early cracking of the concrete applied to breakwater members could be reduced, the damage ratio of the members in the processes of transportation and seaside fixing could be reduced, and especially the capacity of resisting extreme loads such as typhoon could be improved. Meanwhile, the weight of the concrete settlement substrate could be reduced bylightweight aggregate concrete in the present invention, and the costs of transportation, labor and the like could be reduced in the processes of preparation, transportation and maintenance of samples. The labor cost of fishermen moving the settlement substrate and harvesting the oysters could be reduced or the costs of transportation, fixing and the like could be reduced during sea farming. The risk of breaking due to careless falling onto the ground during use could be reduced.

Therefore, the above knowledge related to crossing of the marine sessile organism discipline, marine plants and marine concrete engineering disciplines, and technicians in the fields of concrete and engineering or the field of marine organisms could not obtain the technical characteristics of close correlation between the technology of mixing the dark pigment into the concrete to change the color, the technology of modifying the bovine bone powder, the technology of grinding and the technology of controlling the permeability of the concrete and the concrete with the capability of efficiently inducing the settlement of the oysters and high durability concrete from the comparison documents 1-3. The technicians also cloud not obtain the technical characteristics of close correlation between the balance between the reduction of the alkalinity of the concrete and the concentration of calcium ions and the settlement of the marine sessile organisms from the comparison document 4.

The present invention would be described in detail below by means of Examples A, which were only used to illustrate the present invention and did not limit the scope of the present invention. The specific technical solution steps of the project plan were as follows:
Example A1:
   (1) Surveying of a sea area of an ecological engineering construction position: The dominant species of oysters in the sea area and whether the oysters were settled were surveyed; the test was performed 10 times in each season, and the air temperature, seawater temperature, dissolved oxygen, plankton, total dissolved inorganic nitrogen, active phosphate, active silicate, Ca²⁺, Zn²⁺, K⁺and the like in the sea area were recorded; the typhoon times, strength and the like over the years were surveyed; the meteorological and hydrological data of the sea area for many years were looked up; and a feasible method and a solution for constructing an ecological riprap breakwater were analyzed.
   (2) Manufacturing of a concrete settlement substrate: A lightweight concrete settlement substrate with a rough surface for oyster was manufactured using ecological concrete, the size of the settlement substrate was 10 cm × 10 cm × 2 cm, after demoulding, curing with CO₂ was carried out under 10 atmospheric pressures for 1 h, and then standard curing was carried out for 28 d.
   (3) Regular and quantitative collecting and cultivating of oyster larvae: The settlement substrate with the rough surface was placed in a larva collection area of a nearby sea area in July, the collection of the larvae was stopped when the amount of settledoyster larvae was 20 larvae/100 cm², and then the settlement substrate was moved to a sea area with rich baits for floating cultivation.
   (4) Designing of a concrete member: Ecological engineering concrete member configuration design was performed by considering the influence of oyster settlement on the environment and wave absorption; in order to increase the settlement quantity of oysters as much as possible and provide space for other organisms, a thin-wall and multi-opening semi-spherical member was adopted, the internal voidage was more than 40%, six inclined columns were arranged on the surface of the semi-spherical member, and the overall volume of the member was 10 m³.
   (5) Manufacturing of the concrete member: The semi-spherical member was manufactured, in particular a groove structure with a large inside and a small outside, by fiber-reinforced ecological concrete with significant inductive effect for marine sessile organism and through an elastic mold; and the concrete member was subjected to CO₂ curing for 2 h, and then subjected to standard curing for 28 d.
   (6) Placing of concrete samples: In the concentration period ofsettlement and metamorphosis of oyster planktonic larvae in the local sea area of the next year, a dispersed placement method was adopted, the interaction of a plurality of members was considered, and the concrete members were connected by ropes;
   (7) Placing of the oyster settlement substrate in site: The oyster settlement substrate with oysters (the gonad of oysters larvae develops into mature stage) greatly settled on the concrete surface was conveyed to the sea area for constructing the breakwater, one lightweight concrete settlement substrate with the rough surface for oyster was placed on each semi-spherical member and fixed on the semi-spherical member through a rope; in addition, chlorella concentrated bait was put in according to the planktonic condition of the local sea area. Meanwhile, the feeding amount was increased from 25,000 cells/mL, 40,000 cells/mL and 60,000 cells/mL to 80,000 cells/mL according to the development condition of the oyster larvae. And
   (8) Monitoring and managing thestateof the larvasettlement: When the settlement density of the oyster larvae on the concrete surface was 35 larvae/100 cm² by monitoring, the oyster settlement substrate was moved away, and meanwhile, the type and quantity of plankton in the sea area were monitored to decide whether to continue to put in bait.
Example A2:
   (1) Surveying of a sea area of an ecological engineering construction position: The dominant species of oysters in the sea area and whether the oysters were settled were surveyed; the test was performed 15 times in each season, and the air temperature, seawater temperature, dissolved oxygen, plankton, total dissolved inorganic nitrogen, active phosphate, active silicate, Ca²⁺, Zn²⁺, K⁺and the like in the sea area were recorded; the typhoon times, strength and the like over the years were surveyed; the meteorological and hydrological data of the sea area for many years were looked up; and a feasible method and a solution for constructing an ecological riprap breakwater were analyzed.
   (2) Manufacturing of a concrete settlement substrate: A lightweight concrete settlement substrate with a rough surface for oyster was manufactured using ecological concrete, the size of the settlement substrate was 10 cm × 10 cm × 3 cm, after demoulding, curing with CO₂ was carried out under 10 atmospheric pressures for 1.5 h, and then standard curing was carried out for 28 d.
   (3) Regular and quantitative collecting and cultivating of oyster larvae: The lightweight and rough settlement substrate was placed in a larva collection area of a nearby sea area in August, the collection of the larvae was stopped when the settlement amount of the oyster larvae was 20 larvae/100 cm², and then the settlement substrate was moved to a sea area with rich baits for floating cultivation.
   (4) Designing of a concrete member: Ecological engineering concrete member configuration design was performed by considering the influence of oyster settlement on the environment and wave absorption; in order to increase the settlement quantity of the oysters as much as possible and provide space for other organisms, a thin-wall and multi-opening semi-spherical member was adopted, the internal voidage was more than 50%, six inclined columns were arranged on the semi-spherical member, and the overall volume of the member was 15 m³.
   (5) Manufacturing of the concrete member: The semi-spherical member was manufactured, in particular a groove structure with a large inside and a small outside, by fiber-reinforced ecological concrete with significant inductive effect for marine sessile organism and through an elastic mold; and the concrete member was subjected to CO₂ curing for 2 h, and then subjected to standard curing for 28 d.
   (6) Placing of concrete samples: In July of the next year, a dispersed placement method was adopted, the interaction of a plurality of semi-spherical members was considered, and the members were connected by ropes;
   (7) Placing of the oyster settlement substratein site: The oyster settlement substrate with the oysters (the gonad of oysters larvae develops into mature stage) greatlysettled on the concrete surface was conveyed to the sea area for constructing the breakwater, one lightweight concrete settlement substrate with the rough surface for oyster was placed on each semi-spherical member and fixed on the semi-spherical member through a rope; in addition, concreted chlorella was fed according to the planktonic condition of the local sea area. Meanwhile, the feeding amount was increased from 30,000 cells/mL, 50,000 cells/mL and 70,000 cells/mL to 90,000 cells/mL according to the development condition of the oyster larvae.
   (8) Monitoring and managing of the stateof the larvasettlement: When the settlement density of the oyster larvae on the concrete surface was 40 larvae/100 cm² by monitoring, the oyster settlement substrate was moved away, and meanwhile, the type and quantity of plankton in the sea area were monitored to decide whether to continue to put in bait.

The oyster settlement substrate in the Examples A1 and A2 and concretemix for casting was as follows:
The concrete mix of fiber-reinforced ecological concrete (1-22) with significant inductive effect for marine sessile organism, the type of the bionic concrete member (23), the concrete mix of the lightweight concrete settlement substrate with the rough surface for oyster were the same as those in the previous Examples 1-21, and the shape design of the concrete settlement substratefor oyster was specifically shown in Figs. 5-7.

The elastic mold was adopted to prepare the member with a special shape, especially the groove structure with a large inside and a small outside; and the curing mode was determined according to the mix of the concrete, the alkalinity and the penetration resistance of the concrete.
1: According to the concrete mix of ordinary Portland cement, the mix ratios by weight of the ordinary Portland cement, the crushed stone, the sand, the water and the polycarboxylate superplasticizer powder were 17.1%, 46.67%, 29.0%, 7.2% and 0.03% in a sequence.
Wherein the parent rock of the crushed stone was one of basalt and diabase, the maximum particle size of the crushed stone was not more than 50 mm, and the crushed stone was well graded; the sand was one or more of river sand, machine-made sand (the parent rock was one of granite and basalt) or desalinated sea sand, and was well graded. The water should meet the concrete water standard (JGJ63-2006), the Cl⁻ content was less than 1,000 mg/L, the pH value was more than 4.5, and the influence on the initial setting time, final setting time, strength and permeability of cement was small. In the Examples A1 to 22, the above materials were the same.
2: According to the mixing ratio of reference concrete, the mix ratios by weight of the ordinary Portland cement, the silica fume, the blast furnace slag powder, the crushed stone, the sand, the water and the polycarboxylate superplasticizer powder were 10.26%, 0.86%, 5.98%, 46.67%, 29.0%, 7.2% and 0.03% in a sequence.

| Group | Dosage in concrete mass | | | Rateof change relative to reference group | |
|---|---|---|---|---|---|
| | Portland cement | Slag powder | Silica fume | Electric flux | Oyster larvasettlement rate |
| Example A1 | 17.1% | 0% | 0% | 40% | -31% |
| Example A2 | 10.26% | 5.98% | 0.86% | 0% | 0% |

The above examples showed that the blast furnace slag powder and the silica fume were doped into concrete, voids among particles such as cement could be filled, a pozzolanic reaction could be generated, microstructure ofaninterface transition zonewas improved, therefore, the basic strength of the concrete was guaranteed, and the alkalinity and permeability of the concrete were reduced. The alkalinity difference between the concrete and seawater in contact with the concrete was reduced, the alkali release rate could be controlled through the low permeability, and finally oyster larvae could be settled to the surface of the concrete more easily
3: The mix ratios by weight of the unmodified dark pigment, the ordinary Portland cement, the silica fume, the blast furnace slag powder, the crushed stone, the sand, the water and the polycarboxylate superplasticizer powder were 0.51%, 10.26%, 0.79%, 5.54%, 46.67%, 29.0%, 7.2% and 0.03% in sequence.
4: The mix ratios by weight of the unmodified dark pigment, the ordinary Portland cement, the silica fume, the blast furnace slag powder, the crushed stone, the sand, the water and the polycarboxylate superplasticizer powder were 0.86%, 10.26%, 0.75%, 5.23%, 46.67%, 29.0%, 7.2% and 0.03% in sequence.
5: The mix ratios by weight of the unmodified dark pigment, the ordinary Portland cement, the silica fume, the blast furnace slag powder, the crushed stone, the sand, the water and the polycarboxylate superplasticizer powder were 1.37%, 10.26%, 0.68%, 4.79%, 46.67%, 29.0%, 7.2% and 0.03% in sequence.
6: The mix ratios by weight of the modified dark pigment (the mass ratio of iron oxide black to the aniline black mixture was 1: 1), the ordinary Portland cement, the silica fume, the blast furnace slag powder, the crushed stone, the sand, the water and the polycarboxylate superplasticizer powder were 0.51%, 10.26%, 0.79%, 5.54%, 46.67%, 29.0%, 7.2% and 0.03% in a sequence.
7: The mix ratios by weight of the modified dark pigment (the mass ratio of iron oxide black to the aniline black mixture was 1: 1), the ordinary Portland cement, the silica fume, the blast furnace slag powder, the crushed stone, the sand, the water and the polycarboxylate superplasticizer powder were 0.86%, 10.26%, 0.75%, 5.23%, 46.67%, 29.0%, 7.2% and 0.03% in a sequence.
8: The mix ratios by weight of the modified dark pigment (the mass ratio of iron oxide black to the aniline black mixture was 1: 1), the ordinary Portland cement, the silica fume, the blast furnace slag powder, the crushed stone, the sand, the water and the polycarboxylate superplasticizer powder were 1.37%, 10.26%, 0.68%, 4.79%, 46.67%, 29.0%, 7.2% and 0.03% in a sequence.
Wherein the modified dark pigment was prepared by the following steps: mixing 196 transparent resin, 3% of a hardener and 1.5% of an accelerator, wherein the volume ratio of the pigment to the resin was 1: 0.2, curing at a normal temperature for 4 h, curing at 60°C for 4 h, breaking, and grinding with a vibration mill until the fineness was greater than 400 meshes.

| Group | Dosage in concrete mass | | | | Rate of change relative to reference group | |
|---|---|---|---|---|---|---|
| | Unmodified dark pigment | Modified dark pigments | Slag powder | Silica fume | Electric flux | Oyster larvasettlement rate |
| Example A3 | 0.51% | | 5.98% | 0.86% | 0.4% | 21% |
| Example A4 | 0.86% | | 5.23% | 0.75% | 21% | 38% |
| Example A5 | 1.37% | | 4.79% | 0.68% | 34% | 32% |
| Example A6 | | 0.51% | 5.98% | 0.86% | -1.6% | 27% |
| Example A7 | | 0.86% | 5.23% | 0.75% | 0.5% | 47% |
| Example A8 | | 1.37% | 4.79% | 0.68% | 3.2% | 53% |

The dark pigment had great influence on permeability of concrete, and the settlement amount of the oyster larvae was reduced along with increase of the dosage. On one hand, due to the fact that the permeability of the concrete was increased, leach of alkali of the concrete was increased; on the other hand, iron oxide in the concrete was possibly converted into iron ions, so that the concentration of the iron ions was increased, and settlement of the oyster larvae was inhibited. In order to solve the problems, after the pigment was coated with resin, the pigment was ground into powder, thus the permeability resistance of the concrete could be greatly improved, and particularly when the dosage was 1.37%, the electric flux of the concrete was only increased by 3.2%. Meanwhile, along with increase of the dark pigment, the settlement of the oysters was continuously increased, it was different from the situation that the dosage was 1.37% before modification, the settlement ratio of the oyster larvae was reduced.
9: The mix ratios by weight of the unmodified bovine bone powder, the ordinary Portland cement, the silica fume, the blast furnace slag powder, the crushed stone, the sand, the water and the polycarboxylate superplasticizer powder were 0.51%, 10.26%, 0.79%, 5.54%, 46.67%, 29.0%, 7.2% and 0.03% in a sequence.
10: The mix ratios by weight of the unmodified bovine bone powder, the ordinary Portland cement, the silica fume, the blast furnace slag powder, the crushed stone, the sand, the water and the polycarboxylate superplasticizer powder were 0.86%, 10.26%, 0.75%, 5.23%, 46.67%, 29.0%, 7.2% and 0.03% in a sequence.
11: The mix ratios by weight of the unmodified bovine bone powder, the ordinary Portland cement, the silica fume, the blast furnace slag powder, the crushed stone, the sand, the water and the polycarboxylate superplasticizer powder were 1.37%, 10.26%, 0.68%, 4.79%, 46.67%, 29.0%, 7.2% and 0.03% in a sequence.
12: The mix ratios by weight of the modified bovine bone powder, the ordinary Portland cement, the silica fume, the blast furnace slag powder, the crushed stone, the sand, the water and the polycarboxylate superplasticizer powder were 0.51%, 10.26%, 0.79%, 5.54%, 46.67%, 29.0%, 7.2% and 0.03% in a sequence.
13: The mix ratios by weight of the modified bovine bone powder, the ordinary Portland cement, the silica fume, the blast furnace slag powder, the crushed stone, the sand, the water and the polycarboxylate superplasticizer powder were 0.86%, 10.26%, 0.75%, 5.23%, 46.67%, 29.0%, 7.2% and 0.03% in a sequence.
14: The mix ratios by weight of the modified bovine bone powder, the ordinary Portland cement, the silica fume, the blast furnace slag powder, the crushed stone, the sand, the water and the polycarboxylate superplasticizer powder were 1.37%, 10.26%, 0.68%, 4.79%, 46.67%, 29.0%, 7.2% and 0.03% in a sequence.
100-mesh bovine bone powder was added into a phosphoric acid solution with a concentration of 2%, and the weight ratio of the bovine bone powder to the phosphoric acid solution was 1: 3. The bovine bone powder and the phosphoric acid solution were mixed in a stirrer at a rotating speed of 200-500 rpm for 30 min under temperature of 20-30°C, and then were centrifuged for 3 min by a centrifugal machine at a rotating speed of 3,000-5,000 rpm. The supernatant was poured, and the centrifuged solid substance was washed for 2-3 times by using water until washing water did not show acidity anymore; and vacuum drying was performed on the centrifuged solid substance at the temperature of 40°C, the dried bovine bone powder and slag powder in a ratio of 1: 4 were ground by using a vibration mill until the fineness was more than 200 meshes for later use.

| Group | Dosage in concrete mass | | | | Rateof change relative to reference group | |
|---|---|---|---|---|---|---|
| | Unmodified bovine bone powder | Modified bovine bone powder | Slag powder | Silica fume | Electric flux | Oyster larvasettlement rate |
| Example A9 | 0.51% | | 5.98% | 0.86% | 20% | 90% |
| Example A10 | 0.86% | | 5.23% | 0.75% | 42% | 145% |
| Example A11 | 1.37% | | 4.79% | 0.68% | 57% | 205% |
| Example A12 | | 0.51% | 5.98% | 0.86% | -0.5% | 117% |
| Example A13 | | 0.86% | 5.23% | 0.75% | 2.1% | 233% |
| Example A14 | | 1.37% | 4.79% | 0.68% | 4.2% | 400% |

| | | | | | | |
|---|---|---|---|---|---|---|
| Note: The modified bovine bone powder was ground until the fineness was 200 meshes to 300 meshes. | | | | | | |

Because the grinding difficulty of bovine bone powder was high, and the bovine bone powder was difficultly continuously ground when the granularity was about 100 meshes, the bovine bone powder of 100 meshes was chemically modified by diluted phosphoric acid with a concentration of 2%, and then the dried bovine bone powder and slag powder in a ratio of 1: 4 were ground by using the vibration mill until the fineness was more than 200 meshes. Therefore, the contact of the modified bovine bone powder and alkaline substances in the concrete was increased, and meanwhile, the microstructure in the concrete was more compact, and the previous mildew phenomenon was avoided. After modification, the penetration resistance of the concrete was improved under the condition of low dosage. Even if the dosage reached 1.37%, the electric flux was increased by only 4.2%, and the settlement change rate of oyster larvae was increased from 205% to 400%.
15: The mix ratios by weight of the modified bovine bone powder, the modified dark pigment, the oyster shell powder, the ordinary Portland cement, the silica fume, the blast furnace slag powder, the crushed stone, the sand, the water and the polycarboxylate superplasticizer powder were 0.51%, 0.86%, 0.51%, 10.26%, 0.62%, 4.34%, 46.67%, 29.0%, 7.2% and 0.03% in a sequence.
16: The mix ratios by weight of the modified bovine bone powder, the modified dark pigment, the oyster shell powder, the ordinary Portland cement, the silica fume, the blast furnace slag powder, the crushed stone, the sand, the water and the polycarboxylate superplasticizer powder were 0.86%, 0.51%, 0.86%, 10.26%, 0.58%, 4.03%, 46.67%, 29.0%, 7.2% and 0.03% in a sequence.

| Group | Dosage in concrete mass | | | | | Rate of change relative to reference group | |
|---|---|---|---|---|---|---|---|
| | Modified bovine bone powder | Oyster shell powder | Modified dark pigments | Slag powder | Silica fume | Electric flux | Oyster larvasettlement rate |
| Example A15 | 0.51% | 0.51% | 0.86% | 4.34% | 0.62% | 3.2% | 317% |
| Example A16 | 0.86% | 0.51% | 0.86% | 4.03% | 0.58% | 6.8% | 517% |

In the example, on the basis of reference concrete, the dark pigment, the oyster shell powder and the bovine bone powder were added, necessary Ca²⁺ was provided for settlement and metamorphosis of the oysters through the reference concrete, and the alkalinity was relatively low. Meanwhile, the color of the concrete was darkened by the dark pigment, almost all visible light was absorbed, the surface of the concrete became black, and thus a dark environment was provided. HCO₃⁻, PO₄³⁻ and various trace elements necessary for settlement of the oysters were provided by adding the shell powder and the bovine bone powder. Therefore, the settlement of the oysters was p romoted by the above measures together, the settlement change rate of oyster larvae could reach 317% when the dark pigment accounted for 0.86%, the oyster shell powder accounted for 0.51% and the bovine bone powder accounted for 0.51%, and the settlement change rate was increased by 517% when the dark pigment accounted for 0.86%, the oyster shell powder accounted for 0.51% and the bovine bone powder accounted for 0.86%.
17: The mix ratios by weight of the calcium carbonate powder, the ordinary Portland cement, the silica fume, the blast furnace slag powder, the crushed stone, the sand, the water and the polycarboxylate superplasticizer powder were 0.51%, 10.26%, 0.79%, 5.54%, 46.67%, 29.0%, 7.2% and 0.03% in a sequence.
18: The mix ratios by weight of the calcium carbonate powder, the ordinary Portland cement, the silica fume, the blast furnace slag powder, the crushed stone, the sand, the water and the polycarboxylate superplasticizer powder were 0.86%, 10.26%, 0.75%, 5.23%, 46.67%, 29.0%, 7.2% and 0.03% in a sequence.
19: The mix ratios by weight of the calcium carbonate powder, the ordinary Portland cement, the silica fume, the blast furnace slag powder, the crushed stone, the sand, the water and the polycarboxylate superplasticizer powder were 1.37%, 10.26%, 0.68%, 4.79%, 46.67%, 29.0%, 7.2% and 0.03% in a sequence.

| Group | Dosage in concrete mass | | | Rate of change relative to reference group | |
|---|---|---|---|---|---|
| | Calcium carbonate powder | Slag powder | Silica fume | Electric flux | Oyster larvasettlement rate |
| Example A17 | 0.51% | 5.54% | 0.79% | -2.8% | 20% |
| Example A18 | 0.86% | 5.23% | 0.75% | -2.1% | 40% |
| Example A19 | 1.37% | 4.79% | 0.68% | -0.5% | 50% |

In the Example A, 600-mesh calcium carbonate powder with different dosages was used for equivalently replacing the mineral admixture. Along with the increase of the content of the calcium carbonate powder, the penetration resistance of the concrete was weakened, but the electric flux of the concrete was lower than a reference value, and even if the dosage was 1.37%, the penetration resistance of the concrete was still better than that of the reference group. Along with the increase of the dosage of the calcium carbonate powder, the dissolution probability of calcium carbonate in the concrete was increased, so that the settlement change rate was increased, specifically, the dosages were 0.51%, 0.86% and 1.37% respectively, and the settlement change rates of the oyster larvae were increased by 20%, 40% and 50% respectively.
20: The mix ratios by weight of the zinc sulfate, the modified dark pigment, the modified bovine bone powder, the calcium carbonate powder, the ordinary Portland cement, the silica fume, the blast furnace slag powder, the crushed stone, the sand, the water and the polycarboxylate superplasticizer powder were 0.3%, 0.86%, 0.86%, 0.51%, 10.26%, 0.54%, 3.77%, 46.67%, 29.0%, 7.2% and 0.03% in a sequence.
21: The mix ratios by weight of the zinc sulfate, the modified dark pigment, the modified bovine bone powder, the calcium carbonate powder, the ordinary Portland cement, the silica fume, the blast furnace slag powder, the crushed stone, the sand, the water and the polycarboxylate superplasticizer powder were 0.6%, 0.86%, 0.86%, 0.51%, 10.26%, 0.50%, 3.51%, 46.67%, 29.0%, 7.2% and 0.03% in a sequence.
A modification method of zinc sulfate comprises the following steps of: selecting diatomite with SiO₂ content of more than 90% and fineness of 600 meshes, adding 150 g of water into a stirrer at 60°C, then adding 100 g of zinc sulfate, and mixing until the zinc sulfate was completely dissolved for later use; and then heating 150 g of diatomite to 60°C, adding the diatomite into the solution, mixing for 10 min in the stirrer at a rotating speed of 200-500 rpm, and then drying in a drying oven with a temperature of 100°C, thus obtaining the modified zinc sulfate.

| Group | Dosage in concrete mass | | | | | | Rate of change relative to reference group | |
|---|---|---|---|---|---|---|---|---|
| | Zinc sulfate | Bovine bone powder | Calcium carbonate powder | Modified dark pigments | Silica fume | Slag powder | Electric flux | Oyster larvasettlement rate |
| Example A20 | 0.3% | 0.86% | 0.51% | 0.86% | 0.54% | 3.77% | 3.6% | 580% |
| Example A21 | 0.6% | 0.86% | 0.51% | 0.86% | 0.50% | 3.51% | 7.8% | 652% |

| | | | | | | | | |
|---|---|---|---|---|---|---|---|---|
| Note: The dark pigment was modified iron oxide black and aniline black, and the mass ratio was 2: 1. | | | | | | | | |

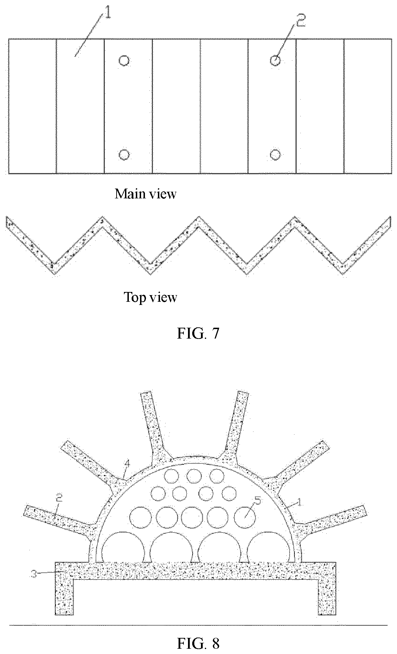

In the example, the zinc sulfate, the bovine bone powder, the calcium carbonate powder and the dark pigment were added on the basis of reference concrete, necessary Ca²⁺ was provided for settlement and metamorphosis of the oysters through the reference concrete, and the alkalinity was low. Meanwhile, the color of the concrete was darkened through the dark pigment, almost all visible light was absorbed, the surface of the concrete became black, and thus a dark environment was provided; HCO₃⁻andPO₄³⁻were provided necessary ions for oyster settlement through adding of the bovine bone powder ; and the calcium carbonate powder and various trace elements in the bovine bone powder and Zn²⁺ provided by the zinc sulfate were provided to promote the settlement of oyster larvae; all-around requirements were met in the aspects of ions and dark colors needed by early induced settlement and metamorphosis of the oyster larvae, and a good effect was achieved. The settlement change rate could reach 580% when the dark pigment accounted for 0.86%, the bovine bone powder accounted for 0.51%, the calcium carbonate powder accounted for 0.51% and the zinc sulfate accounted for 0.2%, and the settlement change rate was 652% when the dark pigment accounted for 0.86%, the bovine bone powder accounted for 0.51%, the calcium carbonate powder accounted for 0.51% and the zinc sulfate accounted for 0.6%.
22: The mix ratios by weight of zinc sulfate, modified dark pigment, modified bovine bone powder, calcium carbonate powder, ordinary Portland cement, the silica fume, blast furnace slag powder, crushed stone, sand, water, chopped fibers and polycarboxylate superplasticizer powder were 0.6%, 0.86%, 0.86%, 0.51%, 10.26%, 0.50%, 3.51%, 46.42%, 28.85%, 7.2%, 0.4% and 0.03% in a sequence.
23: The present invention used the above concrete to perform bionic configuration design on the concrete member, specifically shown in Fig. 8.

In addition, the specific operation steps of the implementation method of the above examples were the same as those of the previous Examples 1-21; and the comparison documents 2-4 which were the same as the previous examples were deleted.

### Compared with a comparison document 5: (Vital breakwater- Coastal Green Infrastructure of New York_Sun Yihe)

The objective of the present invention was different from the comparison document in that: a "vital" breakwater was constructed in the comparison document 5, the concrete member was manufactured through low-alkali cement based on macroscopic design and surface texture, the marine biomass was increased, including marine plants and marine sessile organisms, and mainly including marine plants. In the present invention, besides low alkalization of the cement, the dark pigment, the biological calcium powder, the calcium carbonate powder and the trace elements were added into concrete to induce the oyster larvae, the induction had the characteristics of being rapid and compact, the effect was good, and the ecological environment of the sea area could be improved to a great extent.

Because the knowledge related to crossing of marine sessile organism discipline, marine plants and marine concrete engineering disciplines, technicians in the fields of concrete and engineering or the field of marine organisms could not obtain the technical characteristic of close correlation between the balance between the concrete alkalinity reduction and the calcium ion concentration and the settlement of the marine sessile organisms from comparison documents 2-3.

In addition, the unique characteristics and the beneficial effects of the present invention were that: the contents of the dark pigments, the trace elements and the concrete permeability were the same as the above-mentioned unique characteristics and the beneficial effects.

Only the optimum environment required by settlement, metamorphosis and later growth of marine sessile organisms was mastered, and concrete could be designed from the penetration resistance level of the concrete instead of only considering the dosage of various raw materials and ignoring the penetration resistance change of the concrete. Therefore, the above knowledge related to crossing of the marine sessile organism discipline, chemistry and marine concrete engineering disciplines, and technicians in the fields of concrete and engineering or the field of marine organisms could not obtain the technical characteristics of close correlation between the integral control technology of the penetration resistance of the concrete and the technology of promoting the capability of inducing the settlement of the oysters by the inducer through the existing background.

Therefore, the above knowledge related to crossing of the marine sessile organism discipline, marine plants and marine concrete engineering disciplines, and technicians in the fields of concrete and engineering or the field of marine organisms could not obtain the technical characteristics of close correlation between the technology of mixing the dark pigment into the concrete to change the color, the technology of modifying the bovine bone powder, the technology of grinding and the technology of controlling the permeability of the concrete and the concrete with the capability of efficiently inducing the settlement of the oysters and high durability from the comparison documents 2-3. The technicians also cloud not obtain the technical characteristics of close correlation between the balance between the reduction of the alkalinity of the concrete and the concentration of calcium ions and settlement of the marine sessile organisms from the comparison document 4.

Although examples of the present invention have been shown and described, it would be understood by those skilled in the art that various changes, modifications, and substitutions could be made in these embodiments without departing from the principle and spirit of the present invention and modifications, the scope of the present invention was defined by the appended claims and their equivalents.

## Claims

1. A concrete settlementsubstrate with a rough surfacefor oyster, comprising the following components in percentage by weight: 21.8-34.5% of a cementitious materials, 24.6-37.5% of lightweight coarse aggregate, 15.8-29.6% of lightweight fine aggregate, 8.4-16.4% of water, 0.6-3.0% of a dark pigment, 0.4-2.0% of biological calcium powder, 0.4-2.0% of calcium carbonate powder, 0.2-1.8% of trace elements, 0.15-1.5% of chopped fibers and 0.03-0.18% of a superplasticizer.

2. The concrete settlement substrate with the rough surface for oyster according to claim 1, whereinthe dark pigment is one or twoof iron oxide black, nigrosine, carbon black, antimony sulfide, iron oxide red and organic pigment red; the pigments are modified according to the influence degree on the concrete properties; and one of transparent resin, organosilicon, dimethylsiloxane and a superhydrophobic material is used for modification treatment.

3. The concrete settlement substrate with the rough surface for oyster according to claim 1, wherein the biological calcium powder isbovinebonepowder; and the biological calcium carbonate powder comprises one or a combination of more of oyster shell powder, fishbone powder, egg shell powder and coral powder, with a fineness of 100-1,000 meshes.

4. The concrete settlement substrate with the rough surface for oyster according to claim 4, wherein the biological calcium powder is obtained by treating the 100-500-mesh egg shell powder, coral powder, oyster shell powder and fishbone powder with one or two of acetic acid, silicic acid and sulfurous acid, and by treating the 100-500-mesh bovine bone powder with one or two of diluted phosphoric acid, sulfuric acid, hydrochloric acid and nitric acid.

5. The concrete settlement substrate with the rough surface for oyster according to claim 1, wherein the calcium carbonate powder is calcite powder, chalk powder, limestone powder, marble powder, aragonite powder, travertine powder, and one or more of processed lightweight calcium carbonate, active calcium carbonate, calcium carbonate whiskers and ultrafine lightweight calcium carbonate, with a fineness of greater than 200 meshes.

6. The concrete settlement substrate with the rough surface for oyster according to claim 1, wherein the trace elements that are zinc, iron, potassium and phosphorus are selected from natural minerals, industrial products or chemical reagents, including one or more of zinc sulfate, calcium phosphate, zinc phosphate, potassium sulfate, potassium nitrate, ferric sulfate, ammonium nitrate, potassium phosphate, ammonium phosphate and ferric phosphate, and are modified to realize slow release of corresponding ions and to reduce or eliminate adverse effects on the concrete properties; and for eutrophic areas, substances containing nitrogen and phosphorus elements are not selected.

7. The concrete settlement substrate with the rough surface for oyster according to claim 1, wherein the chopped fibers are inorganic fibers and comprise one or more of basalt fibers, alkali-resistant glass fibers and carbon fibers.

8. The concrete settlement substrate with the rough surface for oyster according to claim 1, wherein the cementitious materials is one of mineral admixture added Portland cement, sulphoaluminate cement and an alkali-activated cementitious material; the mineral admixture in the mineral admixture added Portland cement comprises one or a combination of more of silica fume, slag powder and fly ash;the sulphoaluminate cement comprises one or twoof rapid hardening sulphoaluminate cement, high-strength sulphoaluminate cement and expansive sulphoaluminate cement; and the alkali-activated cementitious material comprises one of alkali-activated slagpowder, and a combination of alkali-activated slagpowder and fly ash.

9. The concrete settlement substrate with the rough surface for oyster according to claim 1, wherein the lightweight coarse aggregate is one or two of crushed lightweight porous basalt and lightweight ceramsite of which the maximum particle size is less than 20 mm; and the lightweight fine aggregate is one or two of crushed zeolite and lightweight ceramic sand, with a particle size of 0.2 to 5 mm.

10. A preparation method of a concrete settlement substrate with a rough surfacefor oyster, comprising the following steps:
S1, designing different roughness according to the characteristic that oyster larvae prefer to settle to rough substrate surface, and then manufacturing molding formworks with different roughness;
S2, weighing a cementitious material, lightweight coarse aggregate, lightweight fine aggregate, water, a dark pigment, biological calcium powder, calcium carbonate powder, trace elements, chopped fibers and a superplasticizer;
S3, firstly putting the lightweight coarse aggregate and the lightweight fine aggregate into a concrete mixer to be mixed for 0.5-1 min; then adding the cementitious material, the dark pigment, the biological calcium powder, the calcium carbonate powder and the trace elements, and continuously mixing for 1-2 min; then adding the chopped fibers, the water and the superplasticizer, and mixing for 2-6 min; then carrying out casting and consolidating after uniformly mixing; and
S4, putting a concrete sample after demoulding into a high-concentration CO₂curing chamber according to the situation to be cured for 0.5-5 h so as to reduce the alkalinity of the cement test sample, and then carrying out standard curing for 28 d or curing according to the actual situation, thus obtaining the concrete settlement substrate with the rough surface for oyster and a good induction effect.

11. A marine ecological engineering construction method, comprising the following steps:
(1) surveying a sea area of an ecological engineering construction position: surveying dominant species of oysters in the sea area and whether the oysters are settled, surveying air temperature, seawater temperature, dissolved oxygen, plankton, total dissolved inorganic nitrogen, active phosphate, active silicate, Ca²⁺, Zn²⁺, K⁺and the like for the sea area at different seasons, and surveying typhoon times, strength and the like over the years;
(2) preparing a concrete settlement substrate: preparing a lightweight concrete settlement substrate with a rough surfacefor oyster, wherein the shape of the concrete settlement substratefor oysteris one of the shapes of a slab-shaped settlement substrate, a wave-shaped settlement substrate and a cylindrical settlement substrate;
(3) Regular and quantitative collecting and cultivating oyster larvae: placing the settlement substrate in a larva collection area of local sea area, where the swimming larvae are mainly in metamorphosis period, stopping collecting the larvaeonce the amount of thesettled oyster larvae is 15-25 larvae/100 cm², and then moving the settlement substrate to a sea area with rich baits for floating cultivation;
(4) designing a concrete member: performing ecological engineering concrete member configuration design by considering the influence of oyster settlement on the environment and wave absorption, wherein in order to increase the settlement quantity of oysters as much as possible and provide space for other organisms, a thin-wall and multi-opening member is adopted, the internal voidage is more than 40%, multiple inclined columns are arranged on the member, and the size of the member is 0.5-15 m³;
(5) manufacturing the concrete member: manufacturing the member with a special shape, in particular a groove structure with a large inside and a small outside, by fiber-reinforced ecological concrete with significant inductive effect for marine sessile organism and through an elastic mold; and determining the maintenance mode according to the concrete mixing ratio and the alkalinity and the impermeability;
(6) placing concrete samples: in the concentration period of settlement and metamorphosis of oyster planktonic larvaein the local sea area of the next year, adopting a dispersed placement method, considering the interaction of a plurality of samples , and connecting the concrete samples by ropes;
samplesamplesamplesample(7) placing the oyster settlement substrate in site: conveying the oyster settlement substrate in whichthe gonad of oysters develops into mature stage in the step (3) to the sea area for constructing the marine ecological engineering, placing one lightweight concrete settlement substrate with the rough surface for oysteron each member and fixing the lightweight concrete settlement substratefor oysteron the concrete member through a rope; in addition, feeding algae or replenishing nutritive saltsif necessary according to the planktonic condition of the local sea area; and
(8) monitoring and managing the stateoflarvalsettlement: monitoring the settlement condition of oyster larvae on the concrete surface; when the larvalsettlement density is 30 to 40 larvae/100 cm², moving away the oyster settlement substrate, monitoring the ecological condition of a breakwater for a long time, and providing improvement measures according to the practical condition.

12. The marine ecological engineering construction method according to claim 11, wherein thefiber-reinforced ecological concreteis specifically prepared from, by weight, 12.5-22.0% of a cementitious material, 39.4-49.8% of crushedstone, 24.9-37.3% of sand, 6.2-8.7% of water, 0.2-1.7% of dark pigment, 0.15-1.0% of biological calcium powder, 0.15-1.0% of calcium carbonate powder, 0.1-1.0% of trace elements, 0.1-1.0% of chopped fibers and 0.02-0.1% of a superplasticizer.

13. The marine ecological engineering construction method according to claim 12, wherein in the raw materials of the fiber-reinforced ecological concrete, the dark pigment is one or two of iron oxide black, nigrosine, carbon black, antimony sulfide, iron oxide red and organic pigment red; the pigments are modified according to the influence degree on the concrete properties; and one of transparent resin, organosilicon, dimethylsiloxaneand a superhydrophobic material is adopted for modification treatment;
the biological calcium powder is bovine bone powder; and the biological calcium carbonate powder comprises one or a combination of more of oyster shell powder, fishbone powder, egg shell powder and coral powder, with a fineness of 100-1,000 meshes;
the biological calcium powder is modified by a method for treating the 100-500-mesh egg shell powder, coral powder, oyster shell powder and fishbone powder with one or two of acetic acid, silicic acid and sulfurous acid, and treating the 100-500-meshbovine bone powder with one or two of diluted phosphoric acid, sulfuric acid, hydrochloric acid and nitric acid;
the calcium carbonate powder is calcite powder, chalk powder, limestone powder, marble powder, aragonite powder, travertine powder, and one or more of processed lightweight calcium carbonate, active calcium carbonate, calcium carbonate whiskers and ultrafine lightweight calcium carbonate, with a fineness of greater than 200 meshes;
the trace elements that are zinc, iron, potassium and phosphorus are selected from natural minerals, industrial products or chemical reagents, including one or more of zinc sulfate, calcium phosphate, zinc phosphate, potassium sulfate, potassium nitrate, ferric sulfate, ammonium nitrate, potassium phosphate, ammonium phosphate and ferric phosphate, and are modified to realize slow release of corresponding ions and to reduce or eliminate adverse effects on the concrete properties; and for eutrophic areas, substances containing nitrogen and phosphorus elements are not selected;
the chopped fibers are inorganic fibers (12-40 mm in length) and comprise one or more of basalt fibers, alkali-resistant glass fibers and carbon fibers;
the cementitious material is one of mineral admixture added Portland cement, sulphoaluminate cement and an alkali-activated cementitious material; the mineral admixture in the mineral admixture added Portland cement comprises one or a combination of more of silica fume, slag powder and fly ash; the sulphoaluminate cement comprises one or two of rapidhardening sulphoaluminate cement, high-strength sulphoaluminate cement and expansive sulphoaluminate cement; and the alkali-activated cementitious material comprises one of alkali-activated slagpowder, and a combination of alkali-activated slag powderand fly ash; and
the sand is one or more of river sand, manufactured sand or desalinated sea sand.

14. The marine ecological engineering construction method according to claim 11, wherein the internal voidage of the thin-wall multi-opening member is more than 40%, and multiple inclined columns are arranged on the thin-wall multi-opening member; the thin-wall multi-opening member comprises a base, a thin-wall hollow concrete shell is connected to the base, and at least six concrete rod membersare arranged on the shell, and the shell can be a sphere or a plate; and the concrete rod memberscan be discsor plates.

15. The marine ecological engineering construction method according to claim 11, wherein the settlement substrate is prepared from the following components in percentage by weight: 21.8-34.5% of a cementitious material, 24.6-37.5% of lightweight coarse aggregate, 15.8-29.6% of lightweight fine aggregate, 8.4-16.4% of water, 0.6-3.0% of a dark pigment, 0.4-2.0% of biological calcium powder, 0.4-2.0% of calcium carbonate powder, 0.2-1.8% of trace elements, 0.1-1.0% of chopped fibers and 0.03-0.15% of a superplasticizer.

16. The marine ecological engineering construction method according to claim 15, wherein
in the raw materials of the settlement substrate, the dark pigment is one or two of iron oxide black, nigrosine, carbon black, antimony sulfide, iron oxide red and organic pigment red; the pigments are modified according to the influence degree on the concrete properties; and one of transparent resin, organosilicon, dimethylsiloxane and a superhydrophobic material is used for modification treatment.
the biological calcium powder is bovine bone powder; the biological calcium carbonate powder comprises one or a combination of more of oyster shell powder, fishbone powder, egg shell powder and coral powder, with fineness of 100-1000 meshes; the 100-500-mesh egg shell powder, coral powder, oyster shell powder and fishbone powder are treated with one or two of acetic acid, silicic acid and sulfurous acid; and the 100-500-mesh bovine bone powder is treated with one or two of diluted phosphoric acid, sulfuric acid, hydrochloric acid and nitric acid;
the calcium carbonate powder is calcite powder, chalk powder, limestone powder, marble powder, aragonite powder, travertine powder, and one or more of processed lightweight calcium carbonate, active calcium carbonate, calcium carbonate whiskers and ultrafine lightweight calcium carbonate, with a fineness of greater than 200 meshes;
the trace elements that are zinc, iron, potassium and phosphorus are selected from natural minerals, industrial products or chemical reagents, including one or more of zinc sulfate, calcium phosphate, zinc phosphate, potassium sulfate, potassium nitrate, ferric sulfate, ammonium nitrate, potassium phosphate, ammonium phosphate and ferric phosphate, and are modified to realize slow release of corresponding ions and to reduce or eliminate adverse effects on the concrete properties; and for eutrophic areas, substances containing nitrogen and phosphorus elements are not selected;
the cementitious material is one of mineral admixture added Portland cement, sulphoaluminate cement and an alkali-activated cementitious material; the mineral admixture in the mineral admixture added Portland cement comprises one or a combination of more of silica fume, slag powder and fly ash; the sulphoaluminate cement comprises one or two of rapid hardening sulphoaluminate cement, high-strength sulphoaluminate cement and expansive sulphoaluminate cement; and the alkali-activated cementitious material comprises one of alkali-activated slagpowder, and a combination of alkali-activated slag powderand fly ash; and
the lightweight coarse aggregate is one or two of crushed lightweight porous basalt and lightweight ceramsite of which the maximum particle size is less than 20 mm;
the lightweight fine aggregate is one or two of crushed zeolite and lightweight ceramic sand, with a particle size of 0.2 to 5 mm;
the chopped fibers are inorganic fibers and comprise one or more of basalt fibers, alkali-resistant glass fibers and carbon fibers;
a preparation method comprises the following steps:
S1, designing different roughness according to the characteristic that oyster larvae prefer to settle on rough substrate surface, and then manufacturing molding formworks with different roughness;
S2, weighing a cementitious material, lightweight coarse aggregate, lightweight fine aggregate, water, a dark pigment, biological calcium powder, calcium carbonate powder, trace elements, chopped fibers and a superplasticizer;
S3, firstly putting the lightweight coarse aggregate and the lightweight fine aggregate into a concrete mixer to be mixed for 0.5-1 min; then adding the cementitious material, the dark pigment, the biological calcium powder, the calcium carbonate powder and the trace elements, and continuously mixing for 1-2 min; then adding the chopped fibers, the water and the superplasticizer, and mixing for 2-6 min; then carrying out casting and consolidating after uniformly mixing; and
S4, putting a concrete sample after demoulding into a high-concentration CO₂curing chamber for curing for 0.5-5 h according to the situation so as to reduce the alkalinity of the concrete sample, and then carrying out standard curing for 28 d or curing according to the actual situation, thus obtaining the concrete settlement substrate with the rough surfacefor oyster and a good induction effect.

17. The marine ecological engineering construction method according to claim 11, wherein
the concentration period of settlement and metamorphosis of oyster planktonic larvae is generally May to August in the north and is generally April to October in the south;

18. The marine ecological engineering construction method according to claim 1, wherein a concrete curing method adopted is that a curing method and a curing time of the concrete are determined according to a concrete mixture; for the concrete prepared by Portland cement, CO₂ curing is adopted, and the curing time is 0.5-5 h; and the concrete is subjected to standard curing for 28 d or cured according to the actual situation.

19. The marine ecological engineering construction method according to claim 11, wherein round holes with the diameter of 3-5 mm are reserved in the cement-based ecological settlement substrate during molding, and the size of the plat-shaped settlement substrate is 10 × 10 × 2-3 cm.

20. The marine ecological engineering construction method according to claim 11, wherein the rope is one of a coir rope, a glass fiber rope and a basalt fiber rope.

21. The marine ecological engineering construction method according to claim 11, wherein the settlement substrate is prepared from the following raw materials in percentage by weight: 0.2-1.7% of a dark pigment, 12.5-22.0% of a cementitious material, 39.4-49.8% of crushed stone, 24.9-37.3% of sand, 6.2-8.7% of water and 0.02-0.1% of a superplasticizer.

22. The marine ecological engineering construction method according to claim 11, wherein the settlement substrate is prepared from the following raw materials in percentage by weight: 0.15-1.37% of bovine bone powder, 12.5-22.0% of a cementitious material, 39.4-49.8% of crushed stone, 24.9-37.3% of sand, 6.2-8.7% of water and 0.02-0.1% of a superplasticizer.

23. The marine ecological engineering construction method according to claim 11, wherein the settlement substrate is prepared from the following raw materials in percentage by weight: 0.15-1.37% of calcium carbonate powder, 12.5-22.0% of a cementitious material, 39.4-49.8% of crushed stone, 24.9-37.3% of sand, 6.2-8.7% of water and 0.02-0.1% of a superplasticizer.
